# EUROPEAN PATENT SPECIFICATION

(11) **EP 3 972 438 B1**
(45) Date of publication and mention of the grant of the patent: **13.05.2026**
(21) Application number: 20808801.3
(22) Date of filing: 20.05.2020
(51) Int. Cl.: A42B 3/12

(54) **HELMET IMPACT ATTENUATION LINER**
STOSSDÄMPFENDE AUSKLEIDUNG FÜR HELM
REVÊTEMENT D'ATTÉNUATION D'IMPACT SUR CASQUE

(30) Priority: 20.05.2019 US 201962850199 P
(43) Date of publication of application: 30.03.2022
(73) Proprietor: Gentex Corporation, Simpson, PA 18407 (US)
(72) Inventor: FRIEDER, Leonard Peter, Jr., Dalton, PA 18414 (US); WEBER, John B., Clarks Summit, PA 18411 (US); MATHEW, Biju, Easton, PA 18045 (US); CASPE, Russell J., Abington TWP, PA 18411 (US)
(74) Representative: Boult Wade Tennant LLP
(86) International application number: PCT/US2020/033797
(87) International publication number: WO 2020/236930

(56) References cited:
- EP-A1- 3 000 341
- EP-A1- 3 838 042
- EP-A1- 3 838 043
- GB-A- 2 490 894
- US-A1- 2014 208 486
- US-A1- 2015 101 899
- US-A1- 2015 313 305
- US-A1- 2016 000 168
- US-A1- 2017 191 802
- US-A1- 2017 303 623
- US-A1- 2018 027 914
- US-A1- 2018 332 918

## Description

### FIELD OF THE INVENTION

The present invention generally relates to helmet liners having an additively manufactured lattice structure for impact attenuation.

### BACKGROUND OF THE INVENTION

Helmet manufacturers have long dealt with the competing requirements of increased impact performance requirements and lower weight targets. Helmets typically have a rigid shell and a compressible liner disposed within the rigid shell. The compressible liner absorbs impact energy and reduces the amount of energy transferred to the user's head during an impact. Current technologies for helmet liners are typically foam based and have a homogenous impact profile. Due to the temperature dependence of existing liner materials, the impact performance is limited to the lowest common denominator over the expected operating range, i.e. lowest temperature, lowest impact velocity and energy. The tendency of foam padding to retain moisture and lack breathability, also leads to reduced user comfort during extended use. Further, the homogeneity of existing liner technology often leads to tradeoffs in performance in different regions of the liner and helmet, and prevents optimal performance with respect to weight.

GB2490894 relates to a layer adapted for use in personal protection equipment such as a helmet or body armour. The layer includes a three-dimensional lattice structure formed of fused powder material.

### BRIEF SUMMARY OF THE INVENTION

According to the appended claims, there is an impact attenuation liner for a helmet including an additively manufactured lattice structure configured to be disposed inside the helmet, the lattice structure including a plurality of cells, each having a plurality of struts and nodes, wherein the lattice structure includes a top surface having a convex curvature corresponding to an inner surface of helmet and a bottom surface having a concave curvature configured to receive a user's head.

The additively manufactured lattice structure is at least partially comprised of a 3D kagome lattice structure. The 3D kagome lattice structure includes a plurality of layers, each layer having the plurality of cells. Each of the plurality of cells of the 3D kagome lattice structure has a geometry resembling a parallelepiped. Each of the plurality of cells may include vertices and at least one vertex is coupled to a tetrahedron.

In some embodiments, the impact attenuation liner further includes a 3D structure disposed at least partially within the lattice structure. The 3D structure may comprise a different material than the lattice structure. The lattice structure may include a plurality of extending portions and the 3D structure includes a plurality of openings each configured to receive one of the plurality of extending portions. The 3D structure may be an aluminum honeycomb sheet.

In some embodiments, the additively manufactured lattice structure comprises a plurality of lattice pads, each of the plurality of lattice pads comprised of an additively manufactured lattice.

In some embodiments, the additively manufactured lattice structure comprises a macroscopic cross-linked carbon nanotube structure.

In some embodiments, the additively manufactured lattice structure comprises a macroscopic cross-linked carbon nanotube structure with re-entrant angles.

In some embodiments, the additively manufactured lattice structure comprises an auxetic macroscopic cross-linked carbon nanotube structure.

In some embodiments, the additively manufactured lattice structure is comprised of polyurethane. The lattice structure may be at least partially comprised of a polymer where the polymer is comprised of one or more of polyurethane, polyamide, glass reinforced composites, carbon reinforced composites, thermoplastic polymer such as acrylonitrile butadiene styrene (ABS), polycarbonate, polyetherimide (PEI), polyetheretherketone (PEEK), thermoset polymer, acrylic polyurethanes, methacrylic polyurethanes, polyurea, polyacrylates, polymethacrylates and polyepoxides.

In some embodiments, in the additively manufactured lattice structure comprised of a material configured to deform non-elastically.

In some embodiments, the plurality of cells each have a size between approximately 1 mm and approximately 30 mm. In some embodiments, a ratio between a thickness of one of the plurality of struts and a size of one of the plurality of cells is between 1:4 and 1:120 and a ratio between the thickness of the one of the plurality of struts and a length of one of the plurality of struts is between 1:1 and 1:60.

In some embodiments, the lattice structure is configured to attenuate impact in response to an impact event having a velocity greater than approximately 3.0 m/s. In some embodiments, the lattice structure is configured to attenuate impact in response to an impact event having an energy level greater than approximately 47 J (35 ft-lb).

In some embodiments, the lattice structure includes a first region having a first level of stiffness and a second region having a second level of stiffness different than the first level of stiffness to provide a different level of impact attenuation than the first region.

In some embodiments, the lattice structure includes auxetic cell geometries with re-entrant angles ranging from approximately 180 degrees to approximately 270 degrees.

In some embodiments, the lattice structure includes a continuous network of channels to enable management of power and data cabling through the lattice structure.

In some embodiments, the impact attenuation liner further includes a stiffening layer coupled to an outer surface of the lattice structure, the stiffening layer configured to function as at least a part of a shell of the helmet. The stiffening layer may have a thickness ranging from 0.051 mm (0.020 in) to 2.54 mm (0.100 in) and an elastic modulus ranging from 0.5 GPa to 200 GPa.

In some embodiments, the impact attenuation liner further includes a stiffening intermediate layer disposed between the lattice structure and one or more of an outer shell of the helmet and a user's head, wherein the stiffening intermediate layer has an elastic modulus of approximately 0.5 GPa to approximately 200 GPa.

In some embodiments, the plurality of cells have a plurality of struts that are hollow and a plurality of nodes that are hollow.

Another embodiment of the present invention provides for an impact attenuation liner for a helmet including an additively manufactured lattice structure configured to be disposed between a shell of the helmet and a user's head, the lattice structure comprising a lattice structure having a plurality of cells, each of the plurality of cells including a plurality of struts, wherein the plurality of cells are shaped to resemble a hexagonal prism and the lattice structure is at least partially comprised of a material having an elastic modulus between 750 MPa and 100 GPa.

In some embodiments, the material has a strain at failure between approximately 40% and approximately 500%.

In some embodiments, the impact attenuation liner further includes a 3D structure coupled to the lattice structure, the 3D structure comprising an aluminum honeycomb sheet.

Another embodiment of the present invention provides for a helmet system including a helmet having a plurality of comfort pads comprised of foam and an additively manufacture impact attenuation lattice structure disposed within the helmet, the additively manufactured impact attenuation lattice structure having a top surface having a convex curvature coupled to an inner surface of the helmet and a bottom surface having a concave curvature configured to receive a user's head, a plurality of cells having a lattice geometry, the plurality of cells having a plurality of struts, wherein the plurality of cells and the plurality of struts are comprised of generally rigid polyurethane, and a continuous network of channels disposed throughout the additively manufactured lattice structure, the continuous network of channels configured to enable air to flow through the additively manufactured lattice structure, wherein the lattice structure includes a first region having a first level of stiffness and a second region having a second level of stiffness different than the first level of stiffness to provide a different level of impact attenuation than the first region. The additively manufactured lattice structure is at least partially comprised of a 3D kagome lattice structure and each of the plurality of cells of the 3D kagome lattice structure has a geometry resembling a parallelepiped.

### BRIEF DESCRIPTION OF THE SEVERAL VIEWS OF THE DRAWINGS

The following detailed description of embodiments of the helmet impact attenuation liner will be better understood when read in conjunction with the appended drawings of exemplary embodiments. It should be understood, however, that the invention is not limited to the precise arrangements and instrumentalities shown.

In the drawings:
Fig. 1 is a cross-sectional view of the helmet impact attenuation liner in accordance with an exemplary embodiment of the present invention;
Fig. 2 is a front perspective view of a portion of a helmet impact attenuation liner in accordance with an exemplary embodiment of the present invention;
Fig. 3 is a bottom view of an impact attenuation liner system in accordance with an exemplary embodiment of the present invention shown inside a helmet;
Figs. 4A-4K illustrate exemplary lattice cell geometries that may be used in the helmet impact attenuation liner;
Fig. 5 is an exemplary kagome lattice structure that may be used in the helmet impact attenuation liner;
Fig. 6 is an exemplary kagome lattice unit cell that may be used in the helmet impact attenuation liner;
Fig. 7 is an exemplary parallelepiped unit cell volume for a kagome unit cell that may be used in the helmet impact attenuation liner;
Fig. 8 is an exemplary additively manufactured lattice composed of macro scale cross-linked (3,3) carbon nanotubes;
Fig. 9 is an exemplary unit cell geometry of cross-linked (3,3) carbon nanotubes;
Fig. 10 is an exemplary cell geometry of auxetic cross-linked (3,3) carbon nanotubes;
Fig. 11A is a top view of a lattice composed of cross-linked (3,3) carbon nanotubes;
Fig. 11B is an isometric view of the lattice of Fig. 11A;
Fig. 12A is a top view of a lattice composed of auxetic cross-linked (3,3) carbon nanotubes;
Fig. 12B is an isometric view of the lattice of Fig. 12A;
Fig. 13 is an illustration of a re-entrant angle in accordance with an exemplary embodiment of the present invention;
Figs. 14A-14C illustrate top views of minimal surface lattice structures with varying cell size and wall thickness for use in the helmet impact attenuation liner in accordance with an exemplary embodiment of the present invention;
Fig. 15 is a portion of a helmet impact attenuation liner with dual material in accordance with an exemplary embodiment of the present invention;
Fig. 16 is a portion of a helmet impact attenuation liner in accordance with an exemplary embodiment of the present invention;
Fig. 17 is a portion of a helmet impact attenuation liner in accordance with an exemplary embodiment of the present invention;
Fig. 18 is a portion of a helmet impact attenuation liner in accordance with an exemplary embodiment of the present invention;
Fig. 19 is a portion of an integrated helmet shell and liner in accordance with an exemplary embodiment of the present invention;
Fig. 20 is a portion of a liner integrated with inner and outer helmet shells in accordance with an exemplary embodiment of the present invention;
Fig. 21 is a graph of the relationship between relative density and relative impact performance of a helmet impact attenuation liner in accordance with an exemplary embodiment of the present invention;
Fig. 22 is a graph of impact testing of various embodiments of helmet impact attenuation liners in accordance with an exemplary embodiment of the present invention;
Fig. 23 is a graph of various stress-strain curves for 3D kagome structure and EPS foam in accordance with an exemplary embodiment of the present invention;
Fig. 24 is a graph of various stress-strain curves of various embodiments of lattices composed of unit cells of Figure 4 in accordance with an exemplary embodiment of the present invention;
Fig. 25 is a finite element analysis of a helmet impact attenuation liner in accordance with an exemplary embodiment of the present invention;
Fig. 26 is a graph of stress-strain curves of lattices composed of unit cell of Figure 4F with various re-entrant angles in accordance with an exemplary embodiment of the present invention;
Fig. 27 is a graph of stress-strain curves for cross-linked (3,3) carbon nanotube lattice and EPS foam in accordance with an exemplary embodiment of the present invention;
Fig. 28 is a graph of stress-strain curves for auxetic cross-linked (3,3) carbon nanotube lattice and EPS foam in accordance with an exemplary embodiment of the present invention;
Fig. 29 is a graph of stress-strain curves of the minimal surface lattices of Figure 14 in accordance with an exemplary embodiment of the present invention;
Fig. 30 is graph of impact testing of helmet impact attenuation liners of Figure 15 in accordance with an exemplary embodiment of the present invention;
Fig. 31 is graph of impact testing of helmet impact attenuation liners of Figure 15 in accordance with an exemplary embodiment of the present invention; and
Fig. 32 is a graph of stress-strain curves of various embodiments of helmet impact attenuation liners of Figure 15 in accordance with an exemplary embodiment of the present invention.

### DETAILED DESCRIPTION OF THE EXEMPLARY EMBODIMENTS OF THE INVENTION

Helmets for head protection are worn in a variety of environments and for various purposes including adventure, sporting, police and military purposes. Helmets may provide protection against projectiles and blunt force impacts. Helmets typically include a helmet shell having a peripheral edge and a retention system (e.g., chinstrap) that may be attached to helmet shell. Helmets also typically include a liner system coupled to an inside surface of the helmet shell to provide a compressible material for comfort and impact energy absorption. The liner system may be composed of a single contiguous structure or multiple distinct structures either of which may or may not completely cover the surface of the helmet shell. The need for a comfortable liner with high impact attenuation is particularly important for defense forces, emergency responders, and industrial personnel operating in high performance environments, as well as individuals wearing helmets for extended periods of time under harsh conditions.

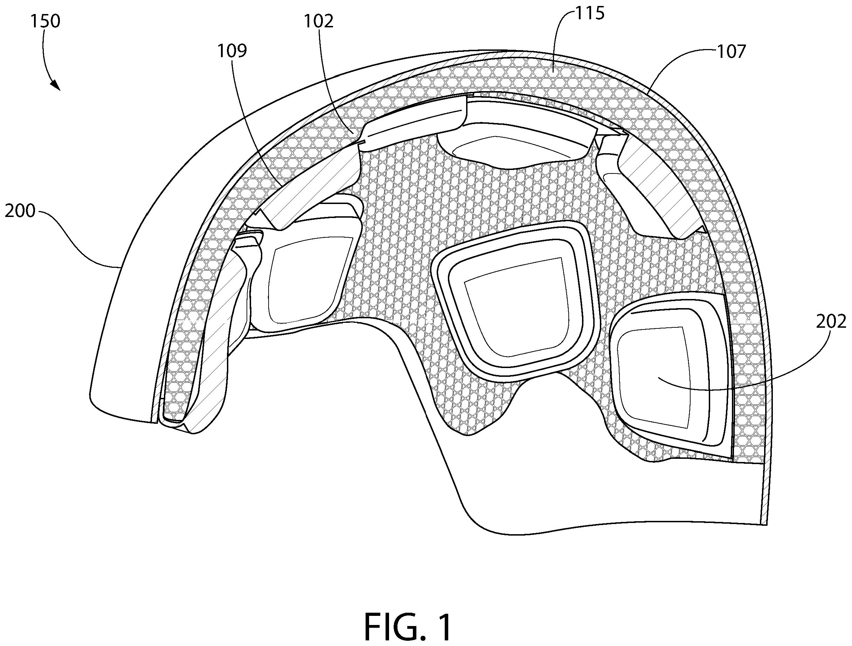

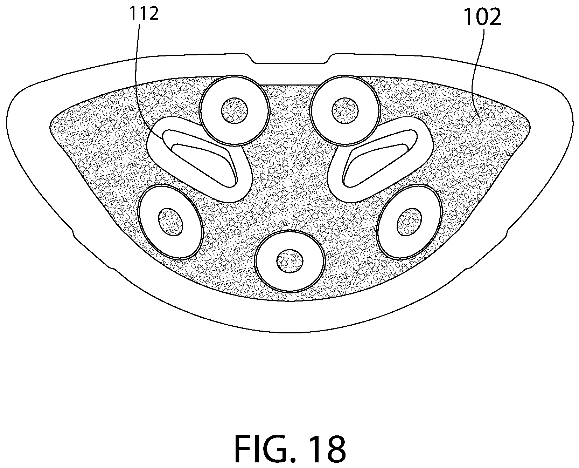

Referring to Figs. 1-3 and 17-20 wherein like reference numerals indicate like elements throughout, there is shown an impact attenuation liner system 100, generally designated 100, in accordance with an exemplary embodiment of the present invention. In certain preferred embodiments of the present invention, impact attenuation liner system 100 includes lattice structure 102. In one embodiment, impact attenuation liner system 100 may be used as a drop-in replacement for the impact liner of an existing helmet. In another embodiment, impact attenuation liner system 100 may be used as a fully integrated system with the helmet.

Referring to Figs. 1-3, lattice structure 102 may be an additively manufactured lattice structure. In some embodiments, lattice structure 102 is configured to be positioned within an interior region of a head protection device, such as helmet 200. More particularly, lattice structure 102 may be configured to be positioned inside helmet 200. Lattice structure 102 may be configured to be positioned between an outer shell of helmet 200 and a user's head during use and to provide impact protection to the user. In some embodiments, lattice structure 102 is disposed anywhere within helmet 200, such as between layers of helmet 200. In one embodiment, lattice structure 102 is shaped such that it retains the same shape whether or not it is coupled to the helmet 200 and/or the user's head. In some embodiments, lattice structure 102 is dimensioned to fit along the interior of helmet 200 from the front of helmet 200 to the back of helmet 200. In some embodiments, lattice structure 102 is configured to entirely fit within the interior of helmet 200 and to not extend beyond the periphery of helmet 200 during use. In some embodiments, lattice structure 102 may be removably coupled to helmet 200. In another embodiment, lattice structure 102 is fixedly coupled to the interior surface of helmet 200. In yet another embodiment, lattice structure 102 is integrally formed with helmet 200.

Helmet 200 may be any type of head protection helmet known in the art, for example, those used for sporting, industrial safety, police, or military purposes. In certain embodiments, helmet 200 is a standard infantry ballistic helmet. In some embodiments, helmet 200 is an advanced combat helmet (ACH), an enhanced combat helmet (ECH), a modular integrated communications helmet (MICH), a tactical ballistic helmet (TBH), a lightweight marine helmet, police general duty helmet, a personnel armor system for ground troops (PASGT), or an aircrew helmet, such as an HGU-56/P rotary wing helmet or an HGU 55/P fixed wing helmet. In one embodiment, helmet 200 may be manufactured with additive manufacturing such as 3D printing, and may include a 3D printed shell. For example, helmet 200 may be comprised of a 3D printed outer shell with an integrated 3D printed energy absorbing lattice layer, such as lattice structure 102. Lattice structure 102 may be configured to provide protection to a user's head, in addition to decreasing the overall weight of helmet 200 compared to traditional liners and helmets. In some embodiments, lattice structure 102 may be manufactured as a single structure or assembled from separate components.

Lattice structure 102 is made by using additive manufacturing, such as 3D printing. Additive manufacturing may allow for specific geometries within lattice structure 102 that may not be manufactured using traditional techniques. Additive manufacturing may allow for lattice structure 102 to be comprised of different materials thereby varying the impact properties of lattice structure 102. Using a 3D printer, lattice structure 102 may be created with varying layers of different materials based on the impact attenuation performance desired. For example, lattice structure 102 may be a hybridization of different impact attenuating materials such as a sheet of aluminum arranged in a honeycomb geometry with a lattice structure, a lattice with expanded polystyrene (EPS), a lattice with expanded polypropylene (EPP), a lattice with polyurethane foam, or a lattice with other aluminum honeycomb, polymeric cellular, polymeric engineered, composite cellular, or composite engineered structures. In some embodiments, lattice structure 102 may be a 3D printed lattice structure. The 3D printed lattice structure may be comprised of a single use crushable material. In some embodiments, the material may withstand or rebound from minor impacts, but is configured to deformably crush to absorb larger impacts. By deforming without rebounding, the energy may be more effectively absorbed and attenuated without transferring to the user's head. In one embodiment, the lattice structure 102 is comprised of polyurethane.

Lattice structure 102 may be comprised of generally rigid polyurethane. In some embodiments, a generally rigid material refers to a non-elastic material. Lattice structure 102 may be comprised of a generally rigid material, such as polyurethane, such that lattice structure 102 is permanently crushed when deformed. In some embodiments, lattice structure 102 is comprised of a material configured to deform non-elastically. In some embodiments, lattice structure 102 may include both elastic material and non-elastic material. For example, lattice structure 102 may include a layer of elastic material and a layer of non-elastic material. Lattice structure 102 may include one or more layers of polyurethane. In some embodiments, lattice structure 102 is at least partially comprised of polymeric segments. Lattice structure 102 may be comprised of one or more of polyurethane, polyamide, glass reinforced composites, carbon reinforced composites, thermoplastic polymer such as acrylonitrile butadiene styrene (ABS), polycarbonate, polyetherimide (PEI), polyetheretherketone (PEEK), thermoset polymer such as acrylic polyurethanes, methacrylic polyurethanes, polyurea, polyacrylates, polymethacrylates and polyepoxides. In some embodiments, preferred materials have a high specific modulus and exhibit significant toughness. In general, materials fitting these criteria tend to be rigid polymers with elastomers performing poorly due to low specific moduli. In one embodiment, a preferred material has an elastic modulus greater than approximately 750 MPa. For example, the material may have an elastic modulus between approximately 750 MPa and 100 GPa. In one embodiment, the strain at failure is greater than approximately 40%.

In one embodiment, lattice structure 102 may be configured to maintain impact performance over a range of varying temperature conditions. For example, lattice structure 102 may be configured to maintain impact performance between approximately -51°C (-60°F) to approximately 82°C (180°F), approximately -40°C (-40°F) to approximately 71°C (160°F), approximately -29°C (-20°F) to approximately 60°C (140°F), approximately -18°C (0°F) to approximately 49°C (120°F), approximately -7°C (20°F) to approximately 38°C (100°F) or approximately 4°C (40°F) to approximately 27°C (80°F). In one embodiment, lattice structure 102 may be configured to maintain impact performance over multiple impact events at high impact velocities. For example, lattice structure 102 may be configured to maintain impact performance at impact velocities greater than approximately 3.0 m/s, approximately 4.25 m/s, approximately 5.2 m/s, approximately 6.0 m/s, approximately 6.5 m/s, approximately 7.0 m/s, approximately 8.5 m/s, approximately 9.5 m/s, or approximately 10.5 m/s. In one embodiment, lattice structure 102 may be configured to maintain impact performance over multiple impact events at high impact energies. For example, lattice structure 102 may be configured to maintain impact performance at impact energies greater than approximately 47 J (35 ft-lb), approximately 61 J (45 ft-lb), approximately 75 J (55 ft-lb), approximately 88 J (65 ft-lb), or approximately 102 J (75 ft-lb). Lattice structure 102 may be configured to maintain impact performance at impact energies from approximately 34 J (25 ft-lb)to approximately 203 J (150 ft-lb). In one embodiment, lattice structure 102 may be created to match a single user's cranial profile. This may be done via additive manufacturing, such as 3D printing, and may not require the use of individualized tooling or hard tooling.

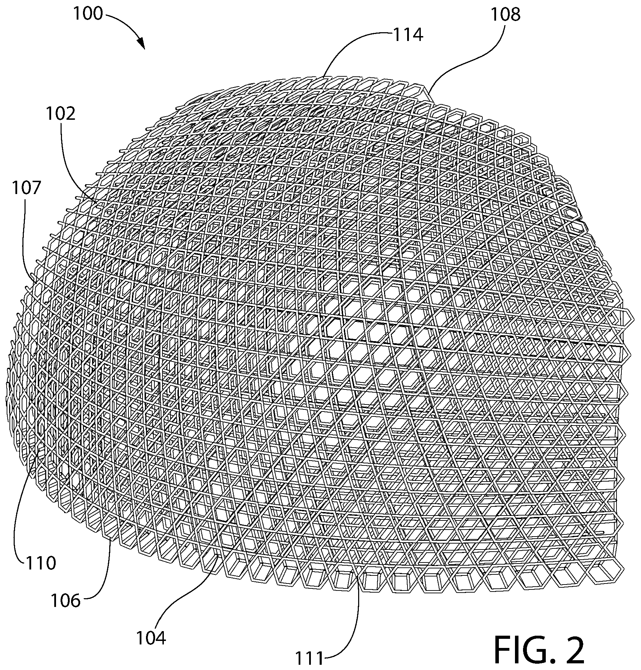

Referring to Figs. 1 and 2, lattice structure 102 includes a plurality of layers 114, each layer 114 comprising cells 104,comprised of struts or walls 106. The cells 104 have a geometry resembling a parallelepiped. However, cells 104 may be other shapes such as frustum, cylinder, cone, pyramid, polygonal, spherical, or combinations thereof, which do not form part of the claimed invention. In one embodiment, struts 106 are hollow to decrease the overall weight of lattice structure 102 and impact attenuation liner system 100. Lattice structure 102 includes nodes 111_{.} Nodes 111 may be joints where struts 106 meet and connect. Cells 104 and struts 106 may be comprised of polyurethane and may be manufactured via additive manufacturing, such as 3D printing. Struts 106 may have a length and thickness (diameter), which may affect the thickness of lattice structure 102. For example, struts 106 may have an aspect ratio ranging from 1:1 to 1:120. In one embodiment, the length and thickness of struts 106 affect the impact attenuation properties of lattice structure 102.

Referring to Figs. 1-3, lattice structure 102 may include top surface 107 and bottom surface 109. In one embodiment, top surface 107 may have a convex curvature and bottom surface 109 may have a concave curvature shaped to receive the user's head. Lattice structure 102 may include front region 108 and back region 110. Front region 108 may be proximate to the user's forehead, and back region 110 may be proximate to the back of the user's head. In one embodiment, struts 106 of back region 110 may have a thickness greater than struts 106 of front region 108. In some embodiments, lattice structure 102 may have a first region with struts 106 having a thickness greater than struts 106 of a second region. In some embodiments, lattice structure 102 includes multiple regions having struts 106 of different thicknesses. A transition region may be disposed between front region 108 and back region 110. The transition region may be an area where of struts 106 transition to struts 106 of increased thickness or decreased thickness. For example, struts 106 of back region 110 may have a ratio of strut length to strut thickness of 1:20 and struts 106 of front region 108 may have a ratio of strut length to strut thickness of 1:10.

In one embodiment, struts 106 of back region 110 may have a stiffness greater than struts 106 of front region 108. In some embodiments, lattice structure 102 may have a first region with struts 106 having a first level of stiffness greater than struts 106 of a second region. In some embodiments, lattice structure 102 includes multiple regions having struts 106 of different stiffness levels. A transition region may be disposed between front region 108 and back region 110. The transition region may be an area where of struts 106 transition to struts 106 of increased stiffness or decreased stiffness.

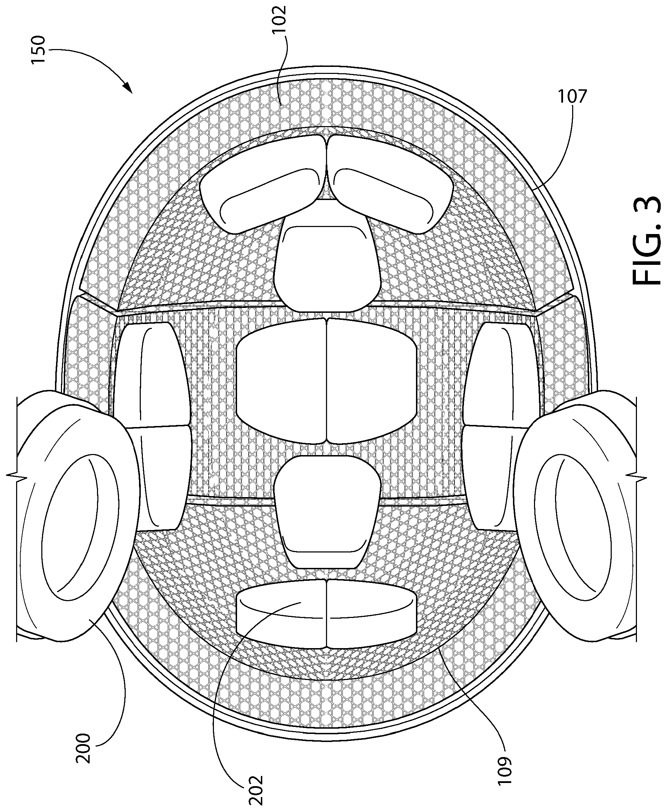

Referring to Figs. 1 and 3, impact attenuation liner system 100 may be used within helmet system 150. Helmet system 150 may include additional materials to provide for increased impact attenuation and/or comfort. For example, impact attenuation liner system 100 may include a comfort liner secured to bottom surface 109 of lattice structure 102. The comfort liner may be configured to provide additional impact attenuation and/or comfort. In some embodiments, impact attenuation liner system 100 includes a plurality of comfort pads 202 secured to bottom surface 109 of lattice structure 102. Pads 202 may each be configured to provide cushioning between the user's head and lattice structure 102 during use. Pads 202 may be moveable by the user to position pads 202 based on user preference and head geometry. In some embodiments, a total of two to twelve pads 202 are provided with impact attenuation liner system 100 and are coupled to lattice structure 102. Impact attenuation liner system 100 may be provided with three, four, five, six, seven, eight, nine, or ten pads 202. In one embodiment, each of pads 202 has substantially the same shape. In another embodiment, pads 202 may include different shapes. Pads 202 may be square, rectangular, circular, or irregularly shaped. Each pad 202 may have a thickness in a range from about 6 mm to about 20 mm, about 8 mm to about 18 mm, about 10 mm to about 16 mm, or about 12 mm to about 14 mm before compression. In one embodiment, each pad 202 is at least 6 mm thick, at least 8 mm thick, at least 12 mm thick, at least 14 mm thick, at least 16 mm thick, or at least 18 mm thick before compression. In one embodiment, each pad 202 is about 13 mm thick before compression. In other embodiments, each pad 202 has a width of about 40 to about 60 mm and a length of about 80 mm to about 110 mm. In one embodiment, each pad 202 has a width of about 50 mm and a length of about 95 mm.

In one embodiment, pads 202 are made from a material that is different than the material used to construct lattice structure 102. Pads 202 may include a soft or resilient material, such as compressible foam. Pads 202 may include a gel material. In one embodiment, pads 202 include a viscoelastic material or an elastomeric material. In a preferred embodiment, pads 202 are constructed from a breathable material. In some embodiments, pads 202 are manufactured via additive manufacturing, such as 3D printing. In one embodiment, each of pads 202 is made from reticulated foam that is enclosed in fabric. Pads 202 may include a foam that is less dense than the impact-absorbing material of lattice structure 102. In one embodiment, pads 202 include plastic open cell reticulated foam enclosed in a fleece material. In one embodiment, pads 202 are made from materials that do not substantially absorb or retain water. For example, pads 202 may include foam having open cells that allow for drainage of water. In one embodiments, pads 202 are made from materials that absorb less water than certain polyurethane foams, such as those available under the ZORBIUM^{®} brand. In another embodiment, pads 202 may be made from materials that absorb moisture.

In some embodiments, lattice structure 102 may be configured to be non-continuous. For example, lattice structure 102 may be sized and shaped to be individual lattice pads disposed within helmet system 150. For example, lattice structure 102 may be a plurality of lattice pads, sized similarly to pads 202. The plurality of lattice pads may be secured to helmet 200. The plurality of lattice pads may each be configured to provide impact attenuation between the user's head and helmet 200. In some embodiments, the plurality of lattice pads may be moveable by the user to position the lattice pads based on user preference and head geometry. In some embodiments, a total of two to twelve lattice pads are provided with impact attenuation liner system 100 and are coupled the interior of helmet 200. In one embodiment, each of the plurality of lattice pads has substantially the same shape. In another embodiment, the plurality of lattice pads may include different shapes. The plurality of lattice pads may be square, rectangular, circular, or irregularly shaped. In some embodiments, the plurality of lattice pads may include one or more of the different configurations of lattice structure 102 discussed herein. For example, one of the plurality of lattice pads may include cells 104 having a kagome geometry and another one of the plurality of lattice pads may include cells 104 having a gyroid geometry. The plurality of lattice pads may have a thickness ranging from approximately 0.1 mm to approximately 30 mm, approximately 0.5 mm to approximately 25 mm, approximately 1 mm to approximately 20 mm, or approximately 10 mm to approximately 15 mm.

In some embodiments, lattice structure 102 is divided into a plurality of islands. Lattice structure 102 may be divided into a plurality of discrete segments to decrease the amount of lattice structure 102 within helmet system 150. For example, lattice structure 102 may be configured to be a plurality of discrete segments to decrease the overall weight of helmet 200 or to allow space for additional interior components, such as pads 202. In some embodiments, lattice structure 102 is configured to be a plurality of discrete segments, with pads 202 disposed between the plurality of discrete segments.

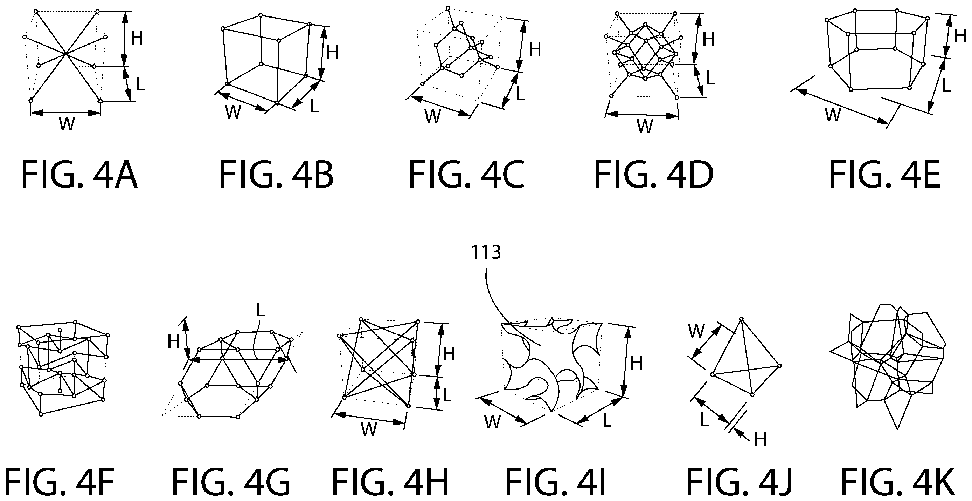

Referring to Figs. 1-4J, lattice structure 102 may include cells 104, which may be various sizes and shapes. Cells 104 may be the same shape and size throughout lattice structure 102 or cells 104 may be different shapes and sizes throughout lattice structure 102. Cells 104 may be arranged within lattice structure 102 in a specific geometry. For example, cells 104 may be arranged in a body centered cubic geometry(Fig. 4A), a cubic geometry (Fig. 4B), a diamond geometry (Fig. 4C), a fluorite geometry (Fig. 4D), a hexagonal prism geometry (Fig. 4E), an auxetic geometry (Fig. 4F), a 3D kagome geometry in accordance with the claimed invention (Fig. 4G), a face centered cubic geometry (Fig. 4H), a gyroid geometry (Fig 4I), a tetrahedral geometry (Fig. 4J), or a voronoi geometry (Fig. 4K). In one embodiment, cells 104 may be arranged in a combination of different geometries. For example, front region 108 of lattice structure 102 may have cells 104 arranged in a one geometry and back region 110 of lattice structure 102 may have cells 104 arranged in a different geometry.

Referring to Figs. 4G and 5-7, cells 104 are arranged in a 3D kagome (tri-hexagonal) geometry. (The 3D kagome geometry may be similar to tri-hexagonal tiling, but in 3D geometry. The 3D kagome geometry of cells 104 resembles a parallelepiped.) When cells 104 are viewed as a layer, the cross-sectional view of the parallelepiped of cells 104 resembles a hexagonal prism. Viewing cells 104 as a layer results in the parallelepiped geometry of cells 104 resembling tetrahedrons and hexagonal prisms arranged such that each side face of the hexagonal prism is shared with a face of an adjacent tetrahedron. For example, the cross-sectional view of cells 104 of the 3D kagome lattice structure may show each hexagonal prism of the including six tetrahedrons disposed around the perimeter of the hexagonal prism. The tetrahedrons may be connected at their vertices such that each tetrahedron has another tetrahedron connected at each of its vertices.

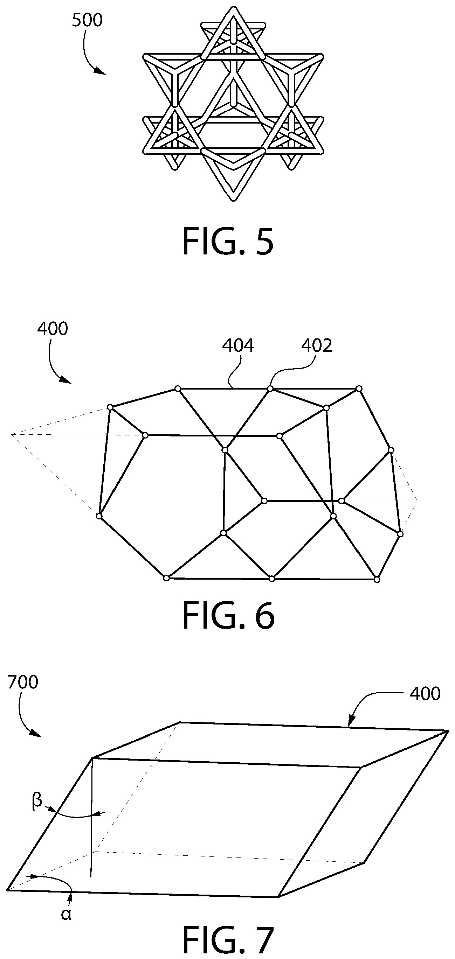

The 3D kagome geometry of cells 104 results in lattice structure 102 having a rigid and efficient structure for absorbing energy. The 3D kagome geometry of cells 104 may result in absorption of energy associated with low velocity blunt force impacts. For example, cells 104 may be configured to attenuate impact in response to an impact event having a velocity greater than approximately 4 m/s, approximately 5 m/s, approximately 6 m/s, approximately 7 m/s, approximately 8 m/s, approximately 9 m/s, or approximately 10 m/s. In some embodiments, cells 104 are be configured to attenuate impact in response to an impact event having a velocity greater than approximately 4.25 m/s, greater than approximately 5.2 m/s, greater than approximately 6.50 m/s or greater than approximately 7.0 m/s. Referring to Fig. 5, cells 104 may be in the shape of 3D kagome geometry 500, which forms a series of tetrahedral elements joined at the vertices when tessellated to fill a volume. The microstructure of 3D kagome geometry 500 can be exploited by additively manufacturing a macroscopic analog, such as via 3D printing. Referring to Fig. 6, cell 104 may be unit cell 400 having a 3D kagome structure. Unit cell 400 may have nodes 402 and struts 404. Referring to Fig. 7, unit cell 400 may be visualized as parallelepiped 700. Parallelepiped 700 may illustrate the bounding volume of unit cell 400. Unit cell 400 may have critical angles α and β. Critical angles α and β may allow the structural response of the unit cell and by connection the lattice as a whole to be tuned to exhibit the desired behavior when subjected to impact.

In one embodiment, the density of lattice structure 102 may be altered by changing the size and shape of cells 104 and struts 106 via additive manufacturing. By changing the size and shape of cells 104 and struts 106, the density and impact properties of lattice structure 102 may be altered in a single additive manufacturing step. In one embodiment, cells 104 may be comprised of different materials throughout lattice structure 102. For example, cells 104 may be made of varying materials throughout the thickness of lattice structure 102. Cells 104 may have a size ranging from approximately 0.1 mm to approximately 30 mm, approximately 0.5 mm to approximately 25 mm, approximately 1 mm to approximately 20 mm, or approximately 10 mm to approximately 15 mm. In a preferred embodiment, the size of cells 104 is approximately 5 mm. Struts 106 may have a thickness ranging from approximately 0.1 mm to approximately 5 mm, approximately 0.5 mm to approximately 3 mm, or approximately 1 mm to approximately 2 mm. The ratio of the thickness of struts 106 to the size of cells 104 may vary. For example, the ratio of the thickness of struts 106 to the size of cells 104 may range from approximately 1:1 to approximately 1:300, approximately 1:50 to approximately 1:250, or approximately 1:100 to approximately 1:200. In a preferred embodiment, the ratio of the thickness of struts 106 to the size of cells 104 ranges from approximately 1:4 to approximately 1:120.

Further, the ratio of the thickness of struts 106 to the length of struts 106 may vary. For example, the ratio of the thickness of struts 106 to the length of struts 106 may range from approximately 50:1 to approximately 1:300, approximately 25:1 to approximately 1:200, or approximately 1:1 to approximately 1:100. In a preferred embodiment, the ratio of the thickness of struts 106 to the length of struts 106 ranges from approximately 1:4 to approximately 1:60. The density of struts 106 per node 111 may vary. In one embodiment, density of struts 106 per node 11 is the number of struts 106 that meet at each node 111. This number may differ based on the desired geometries of cells 104. For example, density of struts 106 per node may range from approximately 1:1 to approximately 1:20, approximately 1:1 to approximately 1:15 or approximately 1:5 to approximately 1:10.

In one embodiment, cells 104 within lattice structure 102 may be arranged to create a network of channels within lattice structure 102. For example, the arrangement of cells 104 within lattice structure may create a continuous network of channels 115 to provide for improved airflow and breathability through lattice structure 102. In one embodiment, channels 115 of lattice structure 102 may provide airflow and increase breathability compared to standard liners, resulting in a significant increase in a user's comfort. Lattice structure 102 may also include channels 115 to allow for threading of cables and wires for cable management during use of impact attenuation liner system 100. Channels 115 disposed within lattice structure 102 may be configured to not affect or sacrifice the impact attenuation performance of impact attenuation liner system 100.

In one embodiment, lattice structure 102 is configured to provide specific impact attenuation performances at specific locations. For example, lattice structure 102 may be configured to match specific performance characteristics in front region 108 and different performance characteristics in back region 110. In another example, lattice structure 102 may be configured to provide greater or lesser impact attenuation at the crown or front of the head versus the left and right sides. Lattice structure 102 may include specific regions which may be configured to crush upon impact. For example, lattice structure 102 may have regions strategically placed throughout lattice structure 102 which may be configured to initiate crushing in order to control the transfer of impact energy on a first and/or second impact event. In one embodiment, lattice structure 102 may allow for the interchangeability of the strategically placed regions by the user in the field based on situation specific performance characteristics. For example, situation specific uses of impact attenuation liner system 100 may require increase or decrease of the thickness of struts 106 of lattice structure 102 to allow for varying impact attenuation.

In some embodiments, different levels of impact attenuation can be achieved by having lattice structure 102 with different densities of the impact-absorbing material at the different locations. In some embodiments, lattice structure 102 may include denser material at locations where greater impact attenuation is desired. In other embodiments, lattice structure 102 may have a variable thickness, for example, such that lattice structure 102 is thicker at portions where greater impact attenuation is desired. Lattice structure 102 may be lined with another material. For example, lattice structure 102 may be lined with a soft material to provide comfort to the user. In another example, lattice structure 102 may be lined with a hard material to provide more protection and impact attenuation to the user.

In one embodiment, additively manufactured auxetic structures may be created within lattice structure 102 to increase specific energy absorption in localized areas. For example, cells 104 may be arranged, via additive manufacturing, in an auxetic geometry throughout specific regions of lattice structure 102 to increase energy absorption in those specific regions. The term "auxetic" as used herein generally refers to a material or structure that has a negative Poisson's ratio. As such, when stretched, auxetic materials become thicker (as opposed to thinner) in a direction perpendicular to the applied force. Likewise, when compressed (e.g., by a blunt impact), auxetic materials become thinner in a direction traverse to the applied force. This contraction of the material acts to draw material in from outside of the impact zone to add supplemental energy absorption. This occurs due to the hinge-like structures (sometimes called a "re-entrant" structure) that form within auxetic materials. Conventional materials, including conventional foams (e.g., expanded polypropylene (EPP)), typically have positive Poisson's ratio, meaning that the materials tend to expand in a direction perpendicular to the direction of compression. Conversely, when a conventional material is stretched, it tends to contract in a direction transverse to the direction of stretching. A rubber band is a good example of an article with a positive Poisson's ratio, in that when stretched, the rubber band becomes thinner.

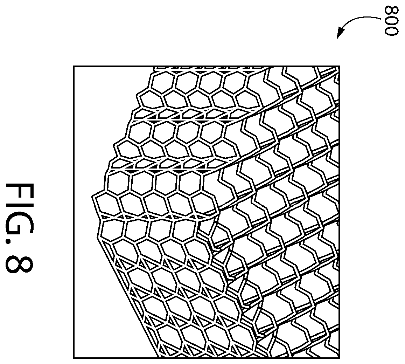

Referring to Fig. 8, auxetic structures may be used to create lattice structure 102. For example, additively manufactured macro scale cross-linked carbon nanotubes (MSCLCNTs) 800 may be used to create lattice structure 102. In some embodiments, MSCLCNTs may be modelled after a superposition-based cross-linking of (3,3) carbon nanotubes. In some embodiments, MSCLCNTs may be an auxetic variant of a superposition-based cross-linking of (3,3) carbon nanotubes. MSCLCNTs may be cross-linked to form a continuous orthotropic material and may be modelled after various permutations achieved by rolling a graphene sheet. In some embodiments, the continuous orthotropic material may have different configurations. For example, at least eight distinct configurations may be created based upon graphene sheets rolled to form CNTs in various rotational orientations and the cross-linking strategy used to combine the CNTs. These discrete configurations may also vary based on the bonding behavior of carbon atoms of the CNTs and the macro scale counterparts can additionally be formed in configurations that are not found in these discreet configurations of atomic scale CNTs. In some embodiments, lattice structure 102 may be produced by additively manufacturing a macroscopic analog of atomic structure of the CNTs. The MSCLCNT structures may provide for low velocity impact attenuation.

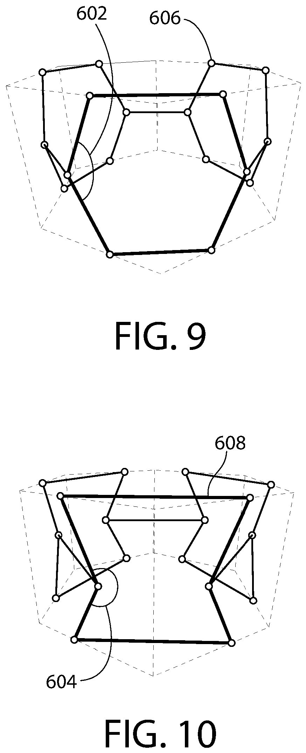

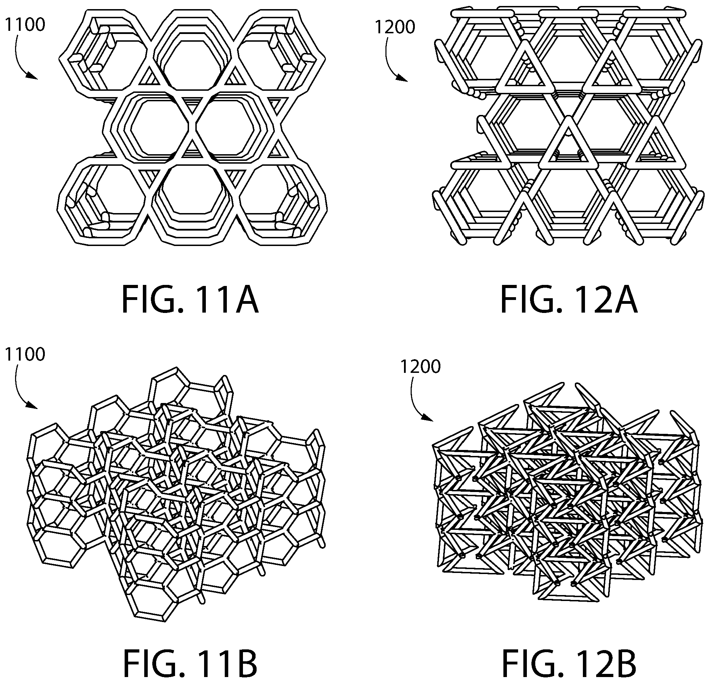

Referring to Figs. 9-12B, cell 104 may be created similarly to atomic scale CNTs and may have a cell geometry following that of a superposition-based cross-linking of (3,3) carbon nanotube 1100 (Figs. 9, 11A-11B) or novel auxetic variant of the macro scale superposition-based cross-linking of (3,3) carbon nanotube 1200 (Figs. 10, 12A-12B). MSCLCNTs (Fig. 9) may have angle 602 and novel auxetic MSCLCNTs (Fig. 10) may have angle 604. Angle 602 may be greater than approximately 90° and angle 604 may be greater approximately 180°. However, angle 602 may be between approximately 90° and approximately 180°, between approximately 120° and approximately 160°, or between approximately 140° and approximately 150°, and angle 604 may be between approximately 180° and approximately 360°, between approximately 210° and approximately 330°, or between approximately 240° and approximately 270°. The auxetic MSCLCNT of Fig. 10 may be created by changing angle 602 of the MSCLCNT of Fig. 9. The modification of angle 602 to angle 604 is significant as auxetic structures have been shown to outperform their standard counterparts in energy absorption due to their inherent structural behavior under loads that cause large deformations. The unit cell structures of both the MSCLCNT (Fig. 9) and the novel auxetic MSCLCNT (Fig. 10) may be contained within a hexagonal prism volume and may be comprised of 18 nodes 606 and 21 struts 608 connecting nodes 606. The unit cell structures of both the MSCLCNT (Fig. 9) and the novel auxetic MSCLCNT (Fig. 10) may contain redundant struts. In some embodiments, unit cell structures of both the MSCLCNT (Fig. 9) and the novel auxetic MSCLCNT (Fig. 10) are tessellated to fill a volume similar to a honeycomb with the MSCLCNT structure oriented such that energy is attenuated by compressing the MSCLCNT structures along their longitudinal axis. In the preferred embodiment, many of the MSCLCNT structures are packed to form a layer of tubes with the longitudinal axis oriented to be coincident with the loading axis.

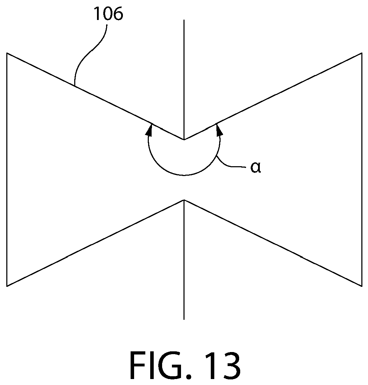

Referring to Fig. 13, cells 104 may have re-entrant angle α and struts 106. The re-entrant angle may be the angle at which struts 106 come together at node 111. In some embodiments, as the re-entrant angle decreases, the shape of cells 104 may resemble a rectangular shape. In some embodiments, as the re-entrant angle increases, the shape of cells 104 may resemble a bowtie shape. In one embodiment, cells 104 of lattice structure 102 may have auxetic geometries with re-entrant angles α ranging from approximately 180° to approximately 360°, approximately 210° to approximately 330°, or approximately 240° to approximately 300°. In some embodiments, the re-entrant angle is any angle that results in a lattice structure 102 having a negative Poisson's ratio

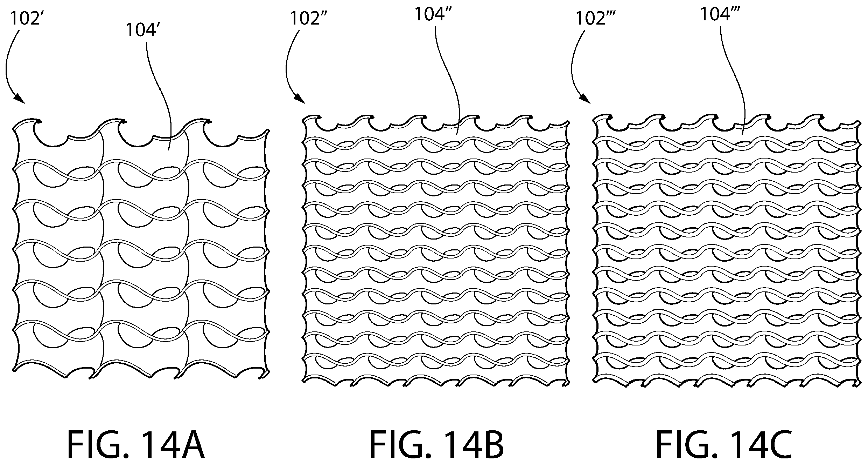

Referring to Figs. 14A-14C, various configurations of cells 104 arranged in a minimal surface, often referred to as a gyroid geometry, are illustrated. In one embodiment, such as Fig. 4I, cells 104 may be configured in a gyroid geometry and may have faces 113 instead of struts 106. Specifically, Figs. 14A-14C show lattice structure 102 with varying sizes of cells 104 and varying thicknesses of faces 113. Fig. 14A shows lattice structure 102' with cells 104' having a larger size than Figs. 14B and 14C, and with thinner faces compared to Figs. 14B and 14C. Fig. 14B shows lattice structure 102" with cells 104" having a smaller size than Fig. 14A and with thicker faces compared to Fig. 14A, but thinner faces than Fig. 14C. Fig. 14C shows lattice structure 102‴ with cells 104‴ having a similar size to Fig. 14B, but with larger faces than Figs. 14A and 14B.

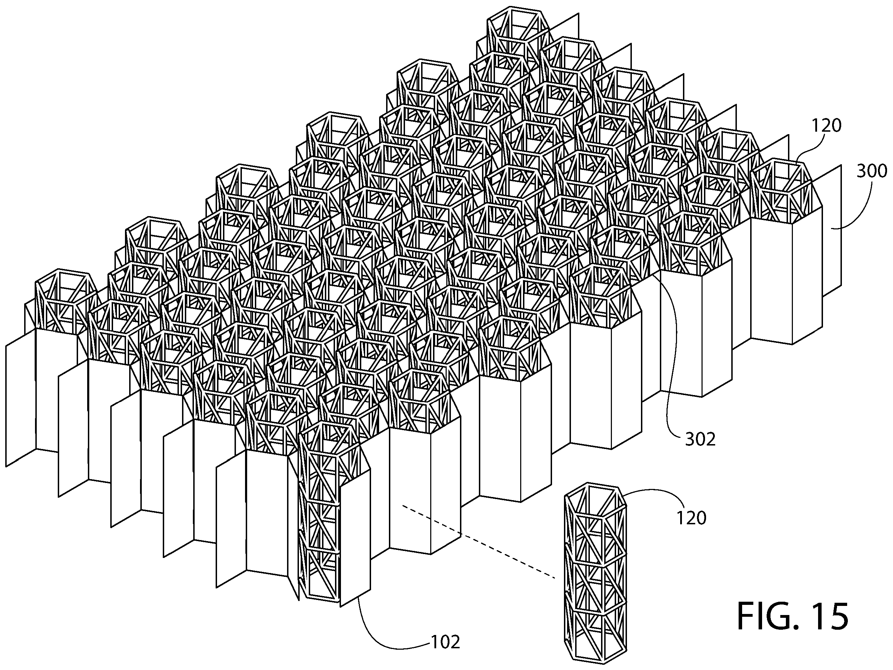

Referring to Figs. 15-18, lattice structure 102 may include second 3D structure 300. Second 3D structure 300 may be used to provide additional impact attenuation properties to impact attenuation liner system 100. For example, lattice structure 102 and second 3D structure 300, in combination, may attenuate a force from an impact event more than just lattice structure 102 alone. In another example, second 3D structure 300 may be configured to attenuate high energy impacts, while lattice structure 102 may be configured to attenuate low energy impacts. This results in the combination of lattice structure 102 and second 3D structure 300 attenuating a wider range of impact events compared to lattice structure 102 alone. In one embodiment, second 3D structure 300 may be comprised of a different material than lattice structure 102. Second 3D structure 300 may be comprised of polymeric foams such as EPS, EPP, or polyurethane foam, or other cellular materials such as a sheet of aluminum honeycomb. In a preferred embodiment, second 3D structure 300 is a sheet of aluminum honeycomb. In one embodiment, second 3D structure 300 is a sheet of pre-crushed aluminum honeycomb such as that disclosed in U.S. Patent Application Publication No. 2018/0140037. Second 3D structure 300 may be pre-crushed to allow for impact attenuation during an impact event. In some embodiments, second 3D structure 300 is a cellular sheet composed of a metallic, composite, or polymeric material.

Referring to Fig. 15, second 3D structure 300 may be disposed at least partially within lattice structure 102 such that second 3D structure 300 and lattice structure 102 are overlapping with one another. In one embodiment, the combination of second 3D structure 300 and lattice structure 102 may include a liner to provide comfort to the user. The combination of second 3D structure 300 and lattice structure 102 may include pads 202 discussed above. In one embodiment, lattice structure 102 includes extending portions or projections 120, which may extend from lattice structure 102. For example, projections 120 may extend from top surface 107 or bottom surface 109 of lattice structure 102. In a preferred embodiment, projections 120 may extend from top surface 107 of lattice structure 102, away from a user's head. Second 3D structure 300 may include openings 302 which may be configured to receive projections 120. In one embodiment, second 3D structure 300 is disposed within lattice structure 102 where projections 120 are disposed within openings 302.

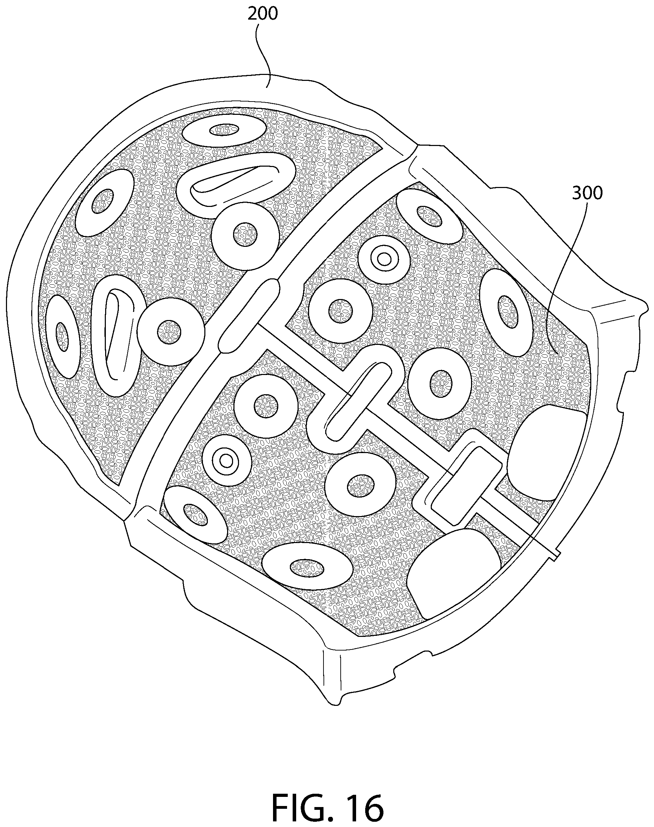

Referring to Fig. 16, second 3D structure 300 may be configured to cover the interior of helmet 200. In one embodiment, an adhesive may be used to secure second 3D structure 300 to lattice structure 102 and/or helmet 200. In some embodiments, hooks may be incorporated into lattice structure 102 to couple to and retain second 3D structure 300.

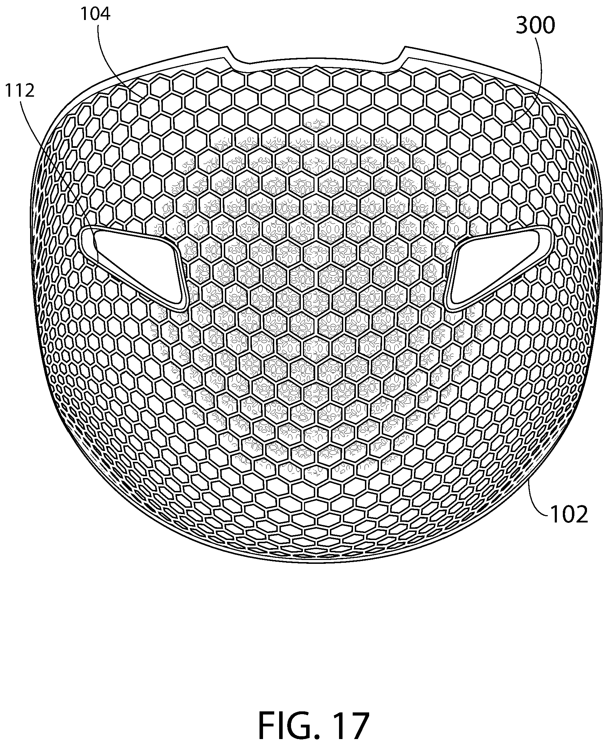

In another embodiment, second 3D structure 300 is disposed on top of lattice structure 102. Second 3D structure 300 may be removably attached to lattice structure 102 during use. For example, second 3D structure 300 may be disposed between lattice structure 102 and a shell of helmet 200. Referring to Figs. 17-18, second 3D structure 300 may be disposed on top of lattice structure 102, such that lattice structure 102 is disposed between the user's head and second 3D structure 300. In yet another embodiment, second 3D structure 300 may be sandwiched between two structures. For example, second 3D structure 300 may be sandwiched between two 3D structures. Second 3D structure 300 being sandwiched between two lattice structures may allow impact attenuation liner system 100 to attenuate higher impact energies. In some embodiments, both lattice structure 102 and second 3D structure 300 may include openings 112. Openings 112 may be configured to provide breathability and airflow to a user's head. For example, both lattice structure 102 and second 3D structure 300 may include openings 112 in the same location such that aligning lattice structure 102 and second 3D structure 300 together results in alignment of openings 112.

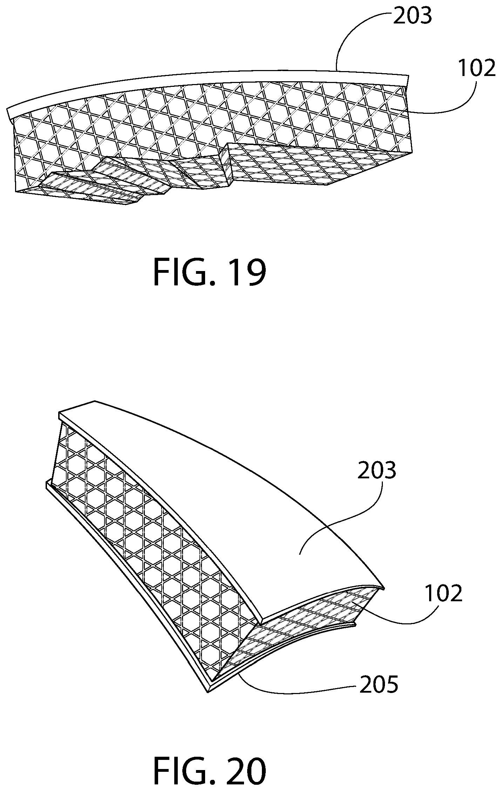

Referring to Figs. 19 and 20, impact attenuation liner system 100 may be used as a fully integrated system with a helmet. For example, as shown in Fig. 19 lattice structure 102 may be fully integrated with exterior helmet shell 203. By way of another example, as shown in Fig. 20, lattice structure 102 may be fully integrated with exterior helmet shell 203 and may include interior helmet shell 205. Interior helmet shell 205 may be an intermediate stiffening layer that may be disposed between lattice structure 102 and a user's head. In some embodiments, the intermediate stiffening layer may function as one or more of exterior helmet shell 203 and interior helmet shell 205. In one embodiment, interior helmet shell 205 may have an elastic modulus ranging from approximately 1 GPa to 200 GPa, approximately 25 GPa to 175 GPa, approximately 50 GPa to 150 GPa, or approximately 75 GPa to 125 GPa. In one embodiment, exterior helmet shell 203 may have an elastic modulus ranging from approximately 1 GPa to 200 GPa, approximately 25 GPa to 175 GPa, approximately 50 GPa to 150 GPa, or approximately 75 GPa to 125 GPa.

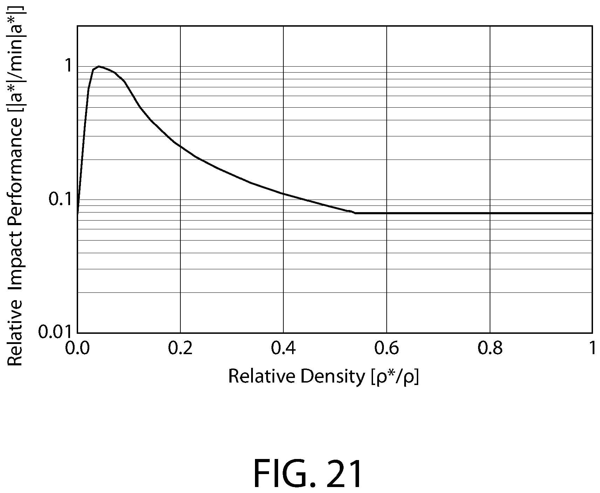

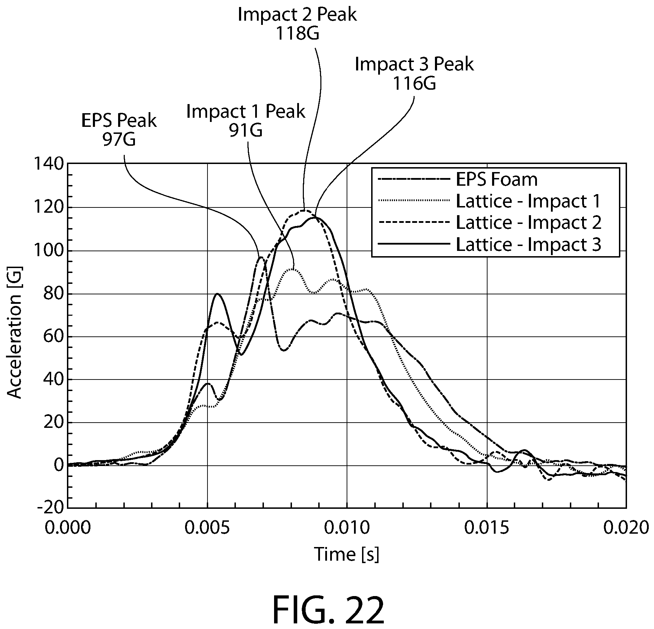

Referring to Fig. 21, a graph of the relative impact performance based on relative density of a material is illustrated. Specifically, Fig. 21 illustrates the relationship between lattice density relative to bulk material from which the lattice is made, and impact performance. The area bounded between 0 to 0.4 relative density and 0.1 to 1 relative impact performance indicates the operating envelope where lattices, such as lattice structure 102, perform optimally for impact attenuation. Current foam technology will follow the normalized performance plot shown but absolute performance will significantly underperform lattice structures as shown in Fig. 22.

Referring to Fig. 22, a graph illustrating acceleration over time of various impacts of lattice structure 102 compared to EPS foam is shown. As illustrated in the graph of Fig. 22, the impact performance after one, two, and three impacts of lattice structure 102 outperform that of the EPS foam liners as the EPS foam liners fracture after the first impact and are thus unusable for subsequent impacts.

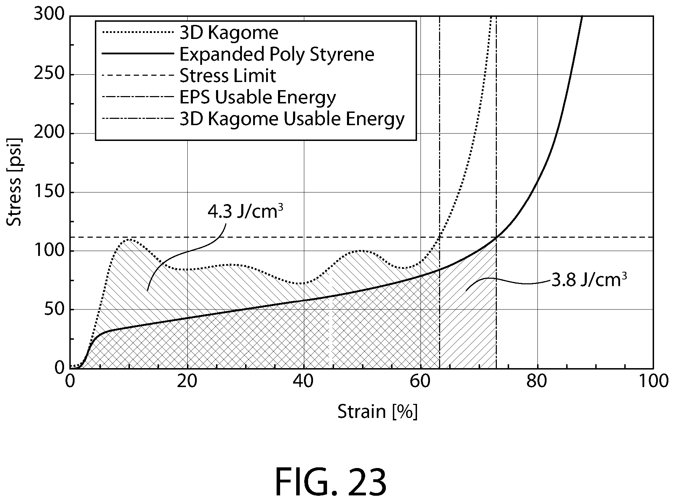

Referring to Fig. 23, a stress-strain graph illustrating compression test results of lattice structure 102 being comprised of a 3D kagome lattice compared to other materials is shown. As shown in the stress-strain graph of Fig. 23, 3D kagome lattice material has a higher energy absorption capability than EPS. Further, one embodiment of the 3D kagome lattice may absorb approximately 13% more energy per unit volume than EPS foam. However, in some embodiments, the 3D kagome geometry of cells 104 of lattice structure 102 may absorb between approximately 5% to approximately 75% more, approximately 10% to approximately 50% more, approximately 10% to approximately 45% more, approximately 20% to approximately 35% more, or approximately 25% to approximately 75% more. Experimental testing of helmets with lattice structures 102 being both EPS and 3D Kagome reflect the static compression analysis of the different materials.

As shown in Table 1, experimental testing of one embodiment indicates an 11% decrease in linear acceleration of lattice structure 102 being comprised of a 3D kagome structure compared to EPS. Stated another way, one embodiment of the 3D kagome lattice had an 11% increase in energy absorption compared to the EPS. This increase in energy absorption translates to an increase in impact performance and allows a smaller volume of the 3D kagome lattice material to do the same energy absorbing work as a much larger volume of traditional polymeric foams, such as EPS. In use, the increase in energy absorption of the 3D kagome lattice material translates to smaller helmets that provide greater impact protection to the user while also facilitating increased airflow and comfort.

**Table 1. Impact performance of 3D Kagome lattice vs EPS**

| | **Peak Accel. [G]** |
|---|---|
| **Expanded Poly Styrene** | 171.2 |
| **3D Kagome Lattice** | 152.1 |
| Difference: | -11% |

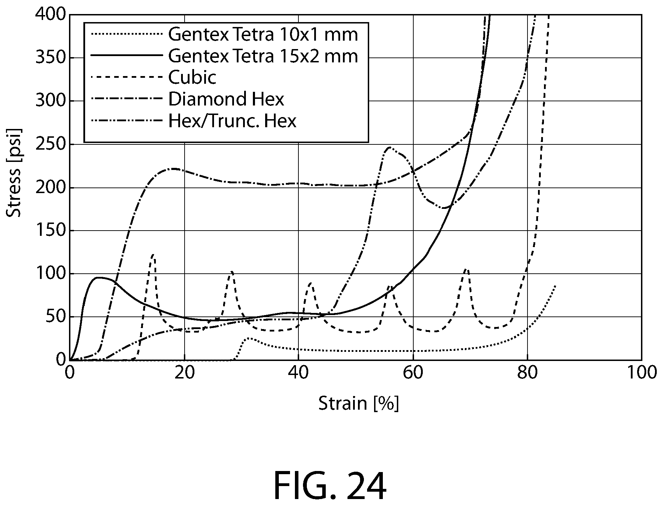

Referring to Fig. 24, a stress-strain graph is shown comparing different geometries of cells 104 via static compression testing. As illustrated in the stress-strain graph of Fig. 24, cells 104 configured in a diamond hexagonal geometry are able to maintain a higher amount of stress compared to the geometries of tetrahedral 10x1 mm, tetrahedral 15x2 mm, cubic, or hexagonal/truncated hexagonal. Further, the area under the curve representing the diamond hexagonal geometry of cells 104 is the greatest compared to the other geometries, and thus is the toughest compared to the geometries of tetrahedral 10x1 mm, tetrahedral 15x2 mm, cubic, or hexagonal/truncated hexagonal. Therefore, the diamond hexagonal geometry of cells 104 provides better impact attenuation performance compared to the geometries of tetrahedral 10x1 mm, tetrahedral 15x2 mm, cubic, or hexagonal/truncated hexagonal.

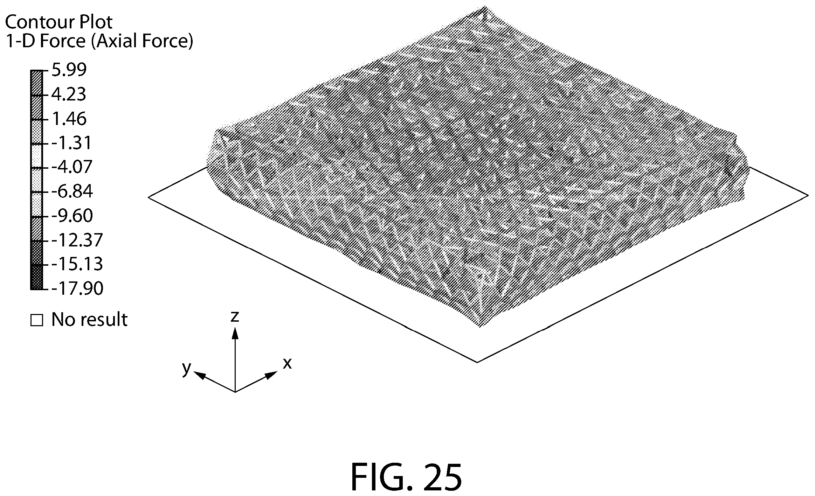

Referring to Fig. 25, a finite element analysis of lattice structure 102 undergoing axial compression is illustrated, where cells 104 of lattice structure 102 are arranged in a tetrahedral geometry. As illustrated in Fig. 25, when a force is applied to the surface of lattice structure 102 in Fig. 25, the force dissipates through the layers of cells 104 of lattice structure 102, where cells 104 are arranged in a tetrahedral geometry. This ensure that the force is attenuate throughout lattice structure 102. In practice, this results in the user of impact attenuation liner system 100 feeling a force significantly less than the force of the impact event. For example, the user may hardly feel the impact event or may not sustain a head injury from the impact event due to impact attenuation liner system 100. Further, a decrease in the force felt by the user from an impact event may also translate to lower cranial acceleration experienced by the user, which may reduce head injuries.

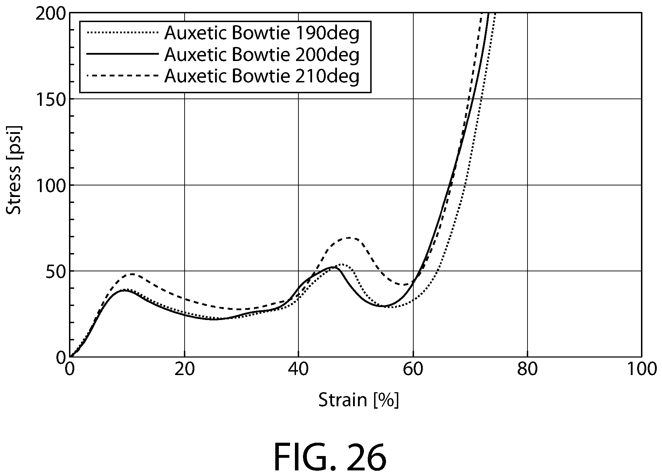

Referring to Fig. 26, a stress-strain graph illustrating compression test results of cells 104 arranged in an auxetic bowtie geometry with varying re-entrant angles. As illustrated in the stress-strain graph of Fig. 26, as the re-entrant angle increases within the range of 180 degrees to 270 degrees, there is greater energy absorption, which translates to improved impact performance.

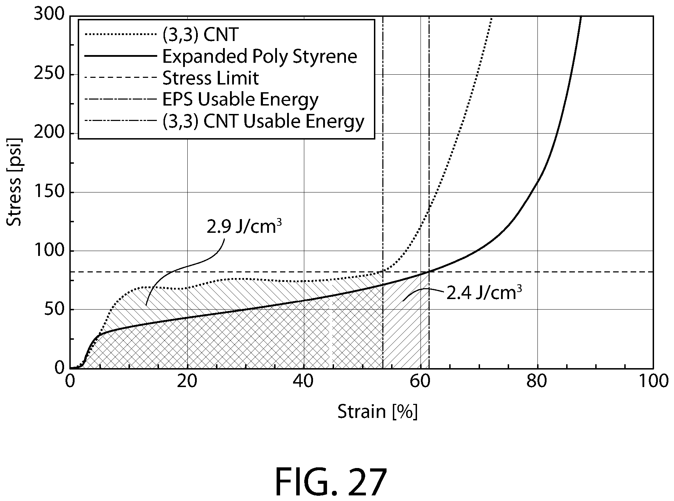

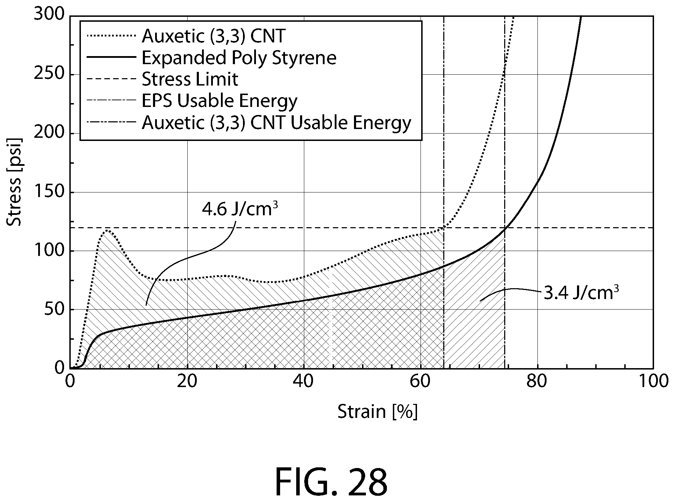

Referring to Fig. 27 and 28, a stress-strain graph illustrating compression test results of lattice structure 102 being comprised of MSCLCNTs and auxetic MSCLCNT, respectively, compared to other materials is shown. As shown in the stress-strain graphs of Figs. 27 and 28, one embodiment of MSCLCNTs and auxetic MSCLCNTs have a higher energy absorption capability than EPS. The static compression of one embodiment of MSCLCNT and auxetic MSCLCNT structures show an improvement in energy absorption compared to EPS. Referring to Fig. 27, one embodiment of the MSCLCNT lattice absorbs 21% more energy per unit volume than the EPS foam. Referring to Fig. 28, the stress-strain graph shows a 35% increase in specific energy absorption of the MSCLCNT lattice over the EPS foam. This increase in specific energy absorption translates to an increase in impact performance and allows for a smaller volume of the MSCLCNT lattice material to do the same energy absorbing work as a significantly larger volume of traditional foams, such as EPS. In use, this translates to smaller helmets that provide greater impact protection to the user while also facilitating increased airflow and comfort.

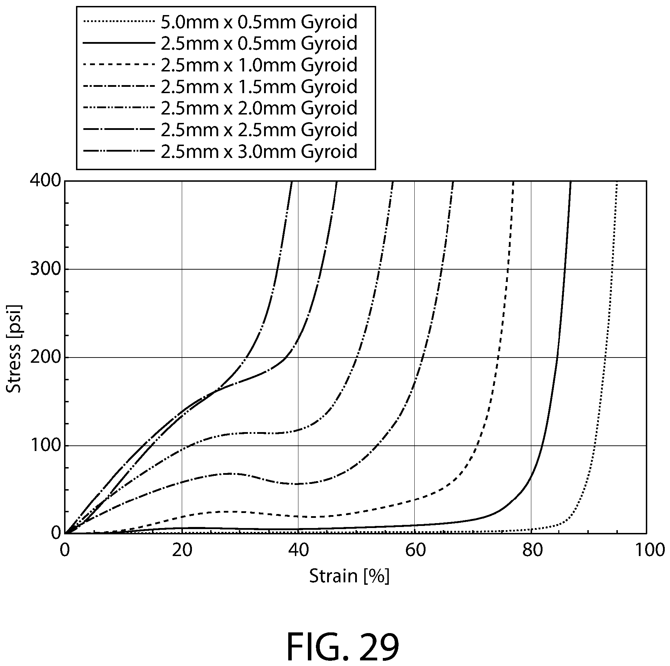

Referring to Fig. 29, a stress-strain graph is illustrated displaying test results from static compression of lattice structures in Figs. 14A-14C. As illustrated in the stress-strain graph of Fig. 29, changing the size of cells 104 and the thickness of struts 106 allows for the tailoring of impact performances of lattice structure 102.

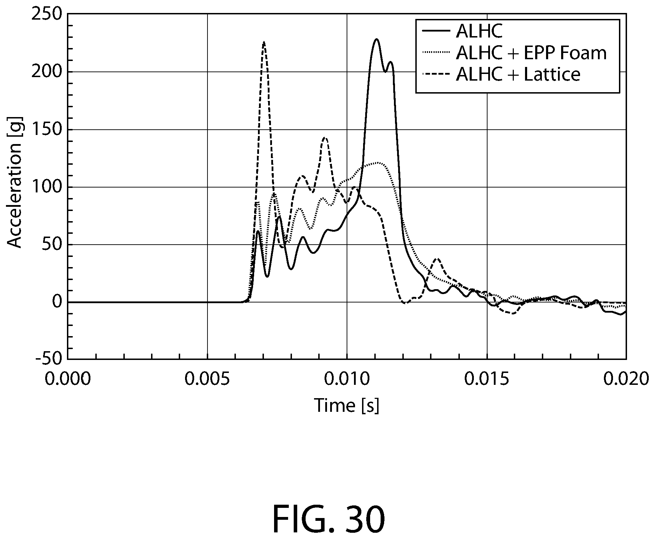

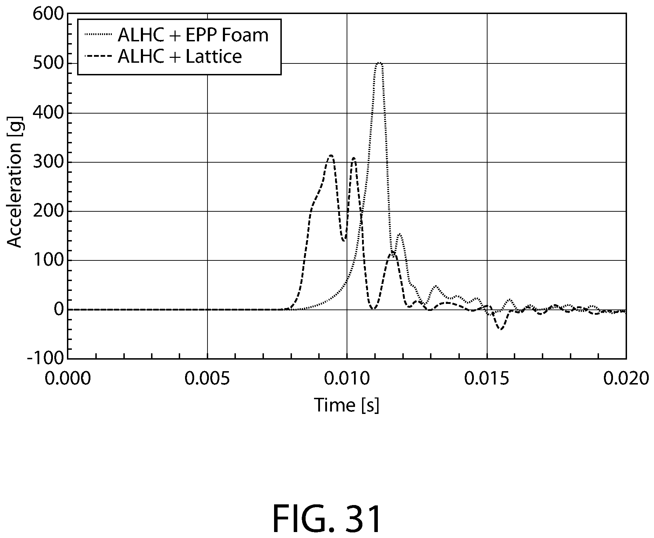

Referring to Fig. 30, a graph is illustrated where second 3D structure 300 is a sheet of aluminum honeycomb (ALHC). As illustrated in Fig. 30, first impact performances of ALHC, and hybrids ALHC with EPP foam and ALHC with lattice structure 102 are illustrated. As illustrated by the graph of Fig. 30, the ALHC with EPP foam hybrid improve first impact performance. As illustrated by Figs. 30 and 31, the ALHC with lattice hybrid maintains first impact performance but significantly improves second impact performance relative to both traditional foam and ALHC with EPP foam hybrid. ALHC without second 3D structure 300 was completely crushed by the first impact therefore a second impact was not practical for testing purposes.

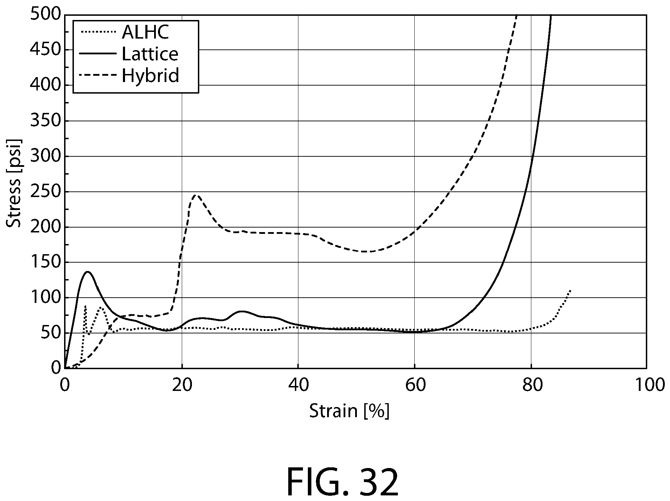

Referring to Fig. 32, a stress-strain graph is illustrated displaying test results from static compression of various embodiments of impact attenuation liner system 100. As illustrated in the stress-strain graph of Fig. 32, a hybrid embodiment comprising lattice structure 102 and second 3D structure 300 being an aluminum honeycomb sheet is able to maintain a higher amount of stress compared to lattice structure 102 alone or the aluminum honeycomb sheet alone. Further, the area under the curve representing the hybrid embodiment is the greatest, and thus is the toughest compared to lattice structure 102 alone or the aluminum honeycomb sheet alone. Therefore, the hybrid embodiment of impact attenuation liner system 100 provides better impact attenuation performance compared to lattice structure 102 alone or the aluminum honeycomb sheet alone.

It will be appreciated by those skilled in the art that changes could be made to the exemplary embodiments shown and described above without departing from the broad inventive concepts thereof. It is understood, therefore, that this invention is not limited to the exemplary embodiments shown and described, but it is intended to cover modifications within the scope of the present invention as defined by the claims. For example, specific features of the exemplary embodiments may or may not be part of the claimed invention and various features of the disclosed embodiments may be combined. The words "front", "back", "lower" and "upper" designate directions in the drawings to which reference is made. The words "inwardly" and "outwardly" refer to directions toward and away from, respectively, the geometric center of the impact attenuation system. Unless specifically set forth herein, the terms "a", "an" and "the" are not limited to one element but instead should be read as meaning "at least one".

It is to be understood that at least some of the figures and descriptions of the invention have been simplified to focus on elements that are relevant for a clear understanding of the invention, while eliminating, for purposes of clarity, other elements that those of ordinary skill in the art will appreciate may also comprise a portion of the invention. However, because such elements are well known in the art, and because they do not necessarily facilitate a better understanding of the invention, a description of such elements is not provided herein.

## Claims

1. An impact attenuation liner for a helmet (200) comprising:
an additively manufactured lattice structure (102) configured to be disposed inside the helmet (200), the lattice structure (102) including a plurality of cells (104), each having a plurality of struts (106) and nodes (111),
wherein the lattice structure (102) includes a top surface (107) having a convex curvature corresponding to an inner surface of the helmet (200) and a bottom surface (109) having a concave curvature configured to receive a user's head;
**characterized in that** the additively manufactured lattice structure (102) is at least partially comprised of a 3D kagome lattice structure that includes a plurality of layers (114), each layer (114) having the plurality of cells (104);
wherein the plurality of cells (104) of each layer of the plurality of layers has a geometry resembling a parallelepiped resembling tetrahedrons and hexagonal prisms arranged such that each side face of the hexagonal prism is shared with a face of an adjacent tetrahedron.

2. The impact attenuation liner of claim 1 wherein a cross-sectional view of cells of the 3D kagome lattice structure shows each hexagonal prism including six tetrahedrons disposed around the perimeter of the hexagonal prism.

3. The impact attenuation liner of claim 2 wherein the six tetrahedrons are connected at their vertices such that each tetrahedron has another tetrahedron connected at each of its vertices.

4. The impact attenuation liner of claim 1 further comprising a 3D structure (300) disposed at least partially within the lattice structure (102);
wherein the 3D structure (300) optionally comprises a different material than the lattice structure, the 3D structure (300) optionally being an aluminum honeycomb sheet.

5. The impact attenuation liner of claim 1 further comprising a 3D structure (300) disposed at least partially within the lattice structure (102), wherein the lattice structure (102) includes a plurality of extending portions (120) and the 3D structure (300) includes a plurality of openings (302) each configured to receive one of the plurality of extending portions (120).

6. The impact attenuation liner of claim 1 further comprising:
a stiffening layer coupled to an outer surface of the lattice structure (102), the stiffening layer configured to function as at least a part of a shell of the helmet (200);
wherein optionally the stiffening layer has a thickness ranging from 0.051 mm (0.020 in) to 2.54 mm (0.100 in) and an elastic modulus ranging from 0.5 GPa to 200 GPa.

7. The impact attenuation liner of claim 1 further comprising:
a stiffening intermediate layer disposed between the lattice structure (102) and one or more of an outer shell of the helmet (200) and a user's head, wherein the stiffening intermediate layer has an elastic modulus of approximately 0.5 GPa to approximately 200 GPa.

8. The impact attenuation liner of claim 1, wherein:
i) the additively manufactured lattice structure (102) comprises a macroscopic cross-linked carbon nanotube structure;
or
ii) the additively manufactured lattice structure (102) comprises a macroscopic cross-linked carbon nanotube structure with re-entrant angles;.
or
iii) the additively manufactured lattice structure (102) comprises an auxetic macroscopic cross-linked carbon nanotube structure.

9. The impact attenuation liner of claim 1, wherein:
i) the additively manufactured lattice structure (102) is comprised of polyurethane;
or
ii) the lattice structure (102) is at least partially comprised of a polymer where the polymer is comprised of one or more of polyurethane, polyamide, glass reinforced composites, carbon reinforced composites, thermoplastic polymer such as acrylonitrile butadiene styrene (ABS), polycarbonate, polyetherimide (PEI), polyetheretherketone (PEEK), thermoset polymer, acrylic polyurethanes, methacrylic polyurethanes, polyurea, polyacrylates, polymethacrylates and polyepoxides;
or
iii) the additively manufactured lattice structure (102) is comprised of a material configured to deform non-elastically;
or
iv) the additively manufactured lattice structure (102) comprises a plurality of lattice pads, each of the plurality of lattice pads comprised of an additively manufactured lattice.

10. The impact attenuation liner of claim 1, wherein:
i) the plurality of cells (104) each have a size between approximately 1 mm and approximately 30 mm;
or
ii) a ratio between a thickness of one of the plurality of struts (106) and a size of one of the plurality of cells (104) is between 1:4 and 1:120 and a ratio between the thickness of the one of the plurality of struts (106) and a length of one of the plurality of struts (106) is between 1:1 and 1:60.

11. The impact attenuation liner of claim 1, wherein:
i) the lattice structure (102) is configured to attenuate impact in response to an impact event having a velocity greater than approximately 3.0 m/s;
or
ii) the lattice structure (102) is configured to attenuate impact in response to an impact event having an energy level greater than approximately 47 J (35 ft-lb);
or
iii) the lattice structure (102) includes a first region having a first level of stiffness and a second region having a second level of stiffness different than the first level of stiffness to provide a different level of impact attenuation than the first region;
or
iv) the lattice structure (102) includes auxetic cell geometries with re-entrant angles ranging from approximately 180 degrees to approximately 270 degrees;
or
v) the lattice structure (102) includes a continuous network of channels (115) to enable management of power and data cabling through the lattice structure (102).

12. The impact attenuation liner of claim 1, wherein the plurality of cells (104) have a plurality of struts (106) that are hollow and a plurality of nodes (111) that are hollow.

13. A helmet system comprising:
a helmet (200);
an additively manufactured impact attenuation lattice structure (102) disposed within the helmet (200), the additively manufactured impact attenuation lattice structure (102) comprising:
a top surface (107) having a convex curvature coupled to an inner surface of the helmet (200) and a bottom surface (109) having a concave curvature configured to receive a user's head;
a plurality of cells (104) having a lattice geometry, the plurality of cells (104) having a plurality of struts (106) and nodes (111), wherein the plurality of cells (104) and the plurality of struts (106) are comprised of generally rigid polyurethane; and
a continuous network of channels (115) disposed throughout the additively manufactured lattice structure (102), the continuous network of channels (115) configured to enable air to flow through the additively manufactured lattice structure (102); and
a plurality of comfort pads (202) comprised of foam and coupled to an interior surface of the lattice structure (102),
wherein the lattice structure (102) includes a first region having a first level of stiffness and a second region having a second level of stiffness different than the first level of stiffness to provide a different level of impact attenuation than the first region;
wherein the additively manufactured lattice structure (102) is at least partially comprised of a 3D kagome lattice structure that includes a plurality of layers (114), each layer (114) having the plurality of cells (104);
wherein each layer of the plurality of layers has a geometry resembling a parallelepiped resembling tetrahedrons and hexagonal prisms arranged such that each side face of the hexagonal prism is shared with a face of an adjacent tetrahedron.

## Patentansprüche

1. Stoßdämpfende Einlage für einen Helm (200), umfassend:
eine additiv gefertigte Gitterstruktur (102), die konfiguriert ist, um im Inneren des Helms (200) angeordnet zu werden, wobei die Gitterstruktur (102) eine Vielzahl von Zellen (104) beinhaltet, die jeweils eine Vielzahl von Streben (106) und Knoten (111) aufweisen,
wobei die Gitterstruktur (102) eine obere Oberfläche (107) beinhaltet, die eine konvexe Krümmung aufweist, die einer Innenoberfläche des Helms (200) entspricht, und eine untere Oberfläche (109), die eine konkave Krümmung aufweist, die konfiguriert ist, um den Kopf eines Benutzers aufzunehmen;
**dadurch gekennzeichnet, dass**
die additiv gefertigte Gitterstruktur (102) mindestens teilweise aus einer 3D-Kagome-Gitterstruktur umfasst ist, die eine Vielzahl von Schichten (114) beinhaltet, wobei jede Schicht (114) die Vielzahl von Zellen (104) aufweist;
wobei die Vielzahl von Zellen (104) jeder Schicht der Vielzahl von Schichten eine Geometrie aufweist, die einem Parallelepiped ähnelt, das Tetraedern und hexagonalen Prismen ähnelt, die angeordnet sind, sodass jede Seitenfläche des hexagonalen Prismas mit einer Fläche eines benachbarten Tetraeders gemeinsam ist.

2. Stoßdämpfende Einlage nach Anspruch 1, wobei eine Querschnittsansicht der Zellen der 3D-Kagome-Gitterstruktur zeigt, dass jedes hexagonale Prisma sechs Tetraeder beinhaltet, die um den Umfang des hexagonalen Prismas angeordnet sind.

3. Stoßdämpfende Einlage nach Anspruch 2, wobei die sechs Tetraeder an ihren Eckpunkten miteinander verbunden sind, sodass jeder Tetraeder einen an jedem seiner Eckpunkte verbundenen anderen Tetraeder aufweist.

4. Stoßdämpfende Einlage nach Anspruch 1, weiter umfassend eine 3D-Struktur (300), die mindestens teilweise innerhalb der Gitterstruktur (102) angeordnet ist;
wobei die 3D-Struktur (300) optional ein anderes Material als die Gitterstruktur umfasst, wobei die 3D-Struktur (300) optional ein Aluminium-Wabenblech ist.

5. Stoßdämpfende Einlage nach Anspruch 1, weiter umfassend eine 3D-Struktur (300), die mindestens teilweise innerhalb der Gitterstruktur (102) angeordnet ist, wobei die Gitterstruktur (102) eine Vielzahl von sich erstreckenden Abschnitten (120) beinhaltet und die 3D-Struktur (300) eine Vielzahl von Öffnungen (302) beinhaltet, die jeweils konfiguriert sind, um einen der sich erstreckenden Abschnitte (120) aufzunehmen.

6. Stoßdämpfende Einlage nach Anspruch 1, weiter umfassend:
eine Versteifungsschicht, die mit einer Außenoberfläche der Gitterstruktur (102) gekoppelt ist, wobei die Versteifungsschicht konfiguriert ist, um mindestens als Teil einer Helmschale (200) zu fungieren;
wobei die Versteifungsschicht optional eine Dicke im Bereich von 0,051 mm (0,020 Zoll) bis 2,54 mm (0,100 Zoll) aufweist und einen Elastizitätsmodul im Bereich von 0,5 GPa bis 200 GPa aufweist.

7. Stoßdämpfende Einlage nach Anspruch 1, weiter umfassend:
eine versteifende Zwischenschicht, die zwischen der Gitterstruktur (102) und einer oder mehreren der Außenschalen des Helms (200) und dem Kopf eines Benutzers angeordnet ist, wobei die versteifende Zwischenschicht einen Elastizitätsmodul von etwa 0,5 GPa bis etwa 200 GPa aufweist.

8. Stoßdämpfende Einlage nach Anspruch 1, wobei:
i) die additiv gefertigte Gitterstruktur (102) eine makroskopische, vernetzte Kohlenstoffnanoröhrenstruktur umfasst;
oder
ii) die additiv gefertigte Gitterstruktur (102) eine makroskopische, vernetzte Kohlenstoffnanoröhrenstruktur mit einspringenden Winkeln umfasst;
oder
iii) die additiv gefertigte Gitterstruktur (102) eine auxetische makroskopische, vernetzte Kohlenstoffnanoröhrenstruktur umfasst;

9. Stoßdämpfende Einlage nach Anspruch 1, wobei:
i) die additiv gefertigte Gitterstruktur (102) aus Polyurethan umfasst ist; oder
ii) die Gitterstruktur (102) mindestens teilweise aus einem Polymer umfasst ist, wobei das Polymer aus einem oder mehreren von Polyurethan, Polyamid, glasfaserverstärkten Verbundwerkstoffen, kohlenstofffaserverstärkten Verbundwerkstoffe, thermoplastischen Polymeren wie Acrylnitril-Butadien-Styrol (ABS), Polycarbonat, Polyetherimid (PEI), Polyetheretherketon (PEEK), Duroplasten, Acrylpolyurethanen, Methacrylpolyurethanen, Polyharnstoff, Polyacrylaten, Polymethacrylaten und Polyepoxiden umfasst ist;
oder
iii) die additiv gefertigte Gitterstruktur (102) aus einem Material umfasst ist, das konfiguriert ist, um sich nicht elastisch zu verformen;
oder
iv) die additiv gefertigte Gitterstruktur (102) eine Vielzahl von Gitterpolstern umfasst, wobei jedes der Vielzahl von Gitterpolster aus einem additiv gefertigten Gitter umfasst ist.

10. Stoßdämpfende Einlage nach Anspruch 1, wobei:
i) die Vielzahl von Zellen (104) jeweils eine Größe zwischen etwa 1 mm und etwa 30 mm aufweisen;
oder
ii) ein Verhältnis zwischen einer Dicke einer der Vielzahl von Streben (106) und einer Größe einer der Vielzahl von Zellen (104) zwischen 1:4 und 1:120 liegt, und ein Verhältnis zwischen der Dicke der einen der Vielzahl von Streben (106) und einer Länge einer der Vielzahl von Streben (106) zwischen 1:1 und 1:60 liegt.

11. Stoßdämpfende Einlage nach Anspruch 1, wobei:
i) die Gitterstruktur (102) konfiguriert ist, um einen Aufprall als Reaktion auf ein Aufprallereignis zu dämpfen, das eine Geschwindigkeit von mehr als etwa 3,0 m/s aufweist;
oder
ii) die Gitterstruktur (102) konfiguriert ist, um einen Aufprall als Reaktion auf ein Aufprallereignis zu dämpfen, das einen Energiepegel von mehr als etwa 47 J (35 ft-lb) aufweist;
oder
iii) die Gitterstruktur (102) einen ersten Bereich beinhaltet, der eine erste Steifigkeit aufweist, und einen zweiten Bereich, der eine zweite Steifigkeit aufweist, die sich von der ersten Steifigkeit unterscheidet, um eine andere Stufe von Aufpralldämpfung bereitzustellen, als der erste Bereich;
oder
iv) die Gitterstruktur (102) auxetische Zellgeometrien mit einspringenden Winkeln beinhaltet, die im Bereich von etwa 180 Grad bis etwa 270 Grad liegen;
oder
v) die Gitterstruktur (102) ein durchgehendes Netzwerk aus Kanälen (115) beinhaltet, um eine Verwaltung von Leistungs- und Datenverkabelung durch die Gitterstruktur (102) hindurch zu ermöglichen.

12. Stoßdämpfende Einlage nach Anspruch 1, wobei die Vielzahl von Zellen (104) eine Vielzahl von Streben (106) aufweisen, die hohl sind, und eine Vielzahl von Knoten (111), die hohl sind.

13. Helmsystem, umfassend:
einen Helm (200);
eine additiv gefertigte Aufpralldämpfungsgitterstruktur (102), die innerhalb des Helms (200) angeordnet ist, wobei die additiv gefertigte Aufpralldämpfungsgitterstruktur (102) umfasst:
eine obere Oberfläche (107), die eine konvexe Krümmung aufweist, die mit einer Innenoberfläche des Helms (200) gekoppelt ist, und eine untere Oberfläche (109), die eine konkave Krümmung aufweist, die konfiguriert ist, um den Kopf eines Benutzers aufzunehmen;
eine Vielzahl von Zellen (104), die eine Gittergeometrie aufweisen, wobei die Vielzahl von Zellen (104) eine Vielzahl von Streben (106) und Knoten (111) aufweisen,
wobei die Vielzahl von Zellen (104) und die Vielzahl der Streben (106) aus im Allgemeinen starrem Polyurethan bestehen; und
ein durchgehendes Netzwerk von Kanälen (115), die durch die gesamte additiv gefertigte Gitterstruktur (102) hindurch angeordnet sind, wobei das durchgehende Netzwerk von Kanälen (115) konfiguriert ist, um zu ermöglichen, dass Luft durch die additiv gefertigte Gitterstruktur (102) strömt; und
eine Vielzahl von Komfortpolstern (202), die aus Schaumstoff bestehen, und an eine Innenoberfläche der Gitterstruktur (102) gekoppelt sind,
wobei die Gitterstruktur (102) einen ersten Bereich beinhaltet, der eine erste Steifigkeit aufweist, und einen zweiten Bereich, der eine zweite Steifigkeit aufweist, die sich von der ersten Steifigkeit unterscheidet, um eine andere Stufe von Aufpralldämpfung bereitzustellen, als der erste Bereich;
wobei die additiv gefertigte Gitterstruktur (102) mindestens teilweise aus einer 3D-Kagome-Gitterstruktur umfasst ist, die eine Vielzahl von Schichten (114) beinhaltet, wobei jede Schicht (114) die Vielzahl von Zellen (104) aufweist;
wobei jede Schicht der Vielzahl von Schichten eine Geometrie aufweist, die einem Parallelepiped ähnelt, das Tetraedern und hexagonalen Prismen ähnelt, die angeordnet sind, sodass jede Seitenfläche des hexagonalen Prismas mit einer Fläche eines benachbarten Tetraeders gemeinsam ist.

## Revendications

1. Doublure d'atténuation d'impact pour un casque (200) comprenant :
une structure en treillis de fabrication additive (102) configurée pour être disposée à l'intérieur du casque (200), la structure en treillis (102) incluant une pluralité de cellules (104), chacune présentant une pluralité d'entretoises (106) et de nœuds (111),
dans laquelle la structure en treillis (102) inclut une surface supérieure (107) présentant une courbure convexe correspondant à une surface intérieure du casque (200) et une surface inférieure (109) présentant une courbure concave configurée pour recevoir la tête d'un utilisateur ;
**caractérisée en ce que**
la structure en treillis de fabrication additive (102) est au moins partiellement composée d'une structure en treillis kagome 3D qui inclut une pluralité de couches (114), chaque couche (114) présentant la pluralité de cellules (104) ;
dans laquelle la pluralité de cellules (104) de chaque couche parmi la pluralité de couches présente une géométrie ressemblant à un parallélépipède ressemblant à des tétraèdres et des prismes hexagonaux agencés de telle sorte que chaque face latérale du prisme hexagonal soit partagée avec une face d'un tétraèdre adjacent.

2. Doublure d'atténuation d'impact selon la revendication 1, dans laquelle une vue en coupe de cellules de la structure en treillis kagome 3D montre chaque prisme hexagonal incluant six tétraèdres disposés autour du périmètre du prisme hexagonal.

3. Doublure d'atténuation d'impact selon la revendication 2, dans laquelle les six tétraèdres sont reliés à leurs sommets de telle sorte que chaque tétraèdre ait un autre tétraèdre relié à chacun de ses sommets.

4. Doublure d'atténuation d'impact selon la revendication 1, comprenant en outre une structure 3D (300) disposée au moins partiellement à l'intérieur de la structure en treillis (102) ;
dans laquelle la structure 3D (300) comprend éventuellement un matériau différent de la structure en treillis, la structure 3D (300) étant éventuellement une feuille alvéolaire d'aluminium.

5. Doublure d'atténuation d'impact selon la revendication 1, comprenant en outre une structure 3D (300) disposée au moins partiellement à l'intérieur de la structure en treillis (102), dans laquelle la structure en treillis (102) inclut une pluralité de parties d'extension (120) et la structure 3D (300) inclut une pluralité d'ouvertures (302) chacune configurée pour recevoir l'une parmi la pluralité de parties d'extension (120).

6. Doublure d'atténuation d'impact selon la revendication 1, comprenant en outre :
une couche de renforcement couplée à une surface extérieure de la structure en treillis (102), la couche de renforcement étant configurée pour fonctionner comme au moins une partie d'une coque du casque (200) ;
dans laquelle la couche de renforcement peut éventuellement présenter une épaisseur allant de 0,051 mm (0,020 po) à 2,54 mm (0,100 po) et un module d'élasticité allant de 0,5 GPa à 200 GPa.

7. Doublure d'atténuation d'impact selon la revendication 1, comprenant en outre :
une couche intermédiaire de renforcement disposée entre la structure en treillis (102) et une ou plusieurs parmi une coque extérieure du casque (200) et la tête de l'utilisateur, dans laquelle la couche intermédiaire de renforcement présente un module d'élasticité d'environ 0,5 GPa à environ 200 GPa.

8. Doublure d'atténuation d'impact selon la revendication 1, dans laquelle :
i) la structure en treillis de fabrication additive (102) comprend une structure de nanotubes de carbone réticulés macroscopiques ;
ou
ii) la structure en treillis de fabrication additive (102) comprend une structure de nanotubes de carbone réticulés macroscopiques avec des angles rentrants ;
ou
iii) la structure en treillis de fabrication additive (102) comprend une structure de nanotubes de carbone réticulés macroscopiques auxétiques.

9. Doublure d'atténuation d'impact selon la revendication 1, dans laquelle :
i) la structure en treillis de fabrication additive (102) est composée de polyuréthane ; ou
ii) la structure en treillis (102) est au moins partiellement composée d'un polymère, où le polymère est composé d'un ou plusieurs parmi polyuréthane, polyamide, composites renforcés de verre, composites renforcés de carbone, polymère thermoplastique comme acrylonitrile butadiène styrène (ABS), polycarbonate, polyétherimide (PEI), polyétheréthercétone (PEEK), polymère thermodurcissable, polyuréthanes acryliques, polyuréthanes méthacryliques, polyurée, polyacrylates, polyméthacrylates et polyépoxydes ;
ou
iii) la structure en treillis de fabrication additive (102) est composée d'un matériau configuré pour se déformer de manière non élastique ;
ou
iv) la structure en treillis de fabrication additive (102) comprend une pluralité de coussinets en treillis, chacun parmi la pluralité de coussinets en treillis étant constitué d'un treillis de fabrication additive.

10. Doublure d'atténuation d'impact selon la revendication 1, dans laquelle :
i) la pluralité de cellules (104) présentent chacune une taille comprise entre environ 1 mm et environ 30 mm ;
ou
ii) un rapport entre une épaisseur d'une parmi la pluralité d'entretoises (106) et une taille d'une parmi la pluralité de cellules (104) est compris entre 1:4 et 1:120 et un rapport entre l'épaisseur de l'une parmi la pluralité d'entretoises (106) et une longueur d'une parmi la pluralité d'entretoises (106) est compris entre 1:1 et 1:60.

11. Doublure d'atténuation d'impact selon la revendication 1, dans laquelle :
i) la structure en treillis (102) est configurée pour atténuer un impact en réponse à un événement d'impact présentant une vitesse supérieure à environ 3,0 m/s ;
ou
ii) la structure en treillis (102) est configurée pour atténuer un impact en réponse à un événement d'impact présentant un niveau d'énergie supérieur à environ 47 J (35 ft-lb) ;
ou
iii) la structure en treillis (102) inclut une première région présentant un premier niveau de rigidité et une seconde région présentant un seconde niveau de rigidité différent du premier niveau de rigidité pour fournir un niveau d'atténuation d'impact différent de celui de la première région ;
ou
iv) la structure en treillis (102) inclut des géométries de cellules auxétiques avec des angles rentrants allant d'environ 180 degrés à environ 270 degrés ;
ou
v) la structure en treillis (102) inclut un réseau continu de canaux (115) pour permettre la gestion de câblage d'alimentation et de données à travers la structure en treillis (102).

12. Doublure d'atténuation d'impact selon la revendication 1, dans laquelle la pluralité de cellules (104) présente une pluralité d'entretoises (106) qui sont creuses et une pluralité de nœuds (111) qui sont creux.

13. Système de casque comprenant :
un casque (200) ;
une structure en treillis d'atténuation d'impact de fabrication additive (102) disposée à l'intérieur du casque (200), la structure en treillis d'atténuation d'impact de fabrication additive (102) comprenant :
une surface supérieure (107) présentant une courbure convexe couplée à une surface intérieure du casque (200) et une surface inférieure (109) présentant une courbure concave configurée pour recevoir la tête d'un utilisateur;
une pluralité de cellules (104) présentant une géométrie en treillis, la pluralité de cellules (104) présentant une pluralité d'entretoises (106) et de nœuds (111),
dans lequel la pluralité de cellules (104) et la pluralité d'entretoises (106) sont constituées de polyuréthane généralement rigide ; et
un réseau continu de canaux (115) disposés dans toute la structure en treillis de fabrication additive (102), le réseau continu de canaux (115) étant configuré pour permettre à l'air de circuler à travers la structure en treillis de fabrication additive (102) ; et
une pluralité de coussinets de confort (202) composés de mousse et couplés à une surface intérieure de la structure en treillis (102),
dans lequel la structure en treillis (102) inclut une première région présentant un premier niveau de rigidité et une seconde région présentant un second niveau de rigidité différent du premier niveau de rigidité afin de fournir un niveau d'atténuation d'impact différent de celui de la première région ;
dans lequel la structure en treillis de fabrication additive (102) est au moins partiellement composée d'une structure en treillis kagome 3D qui inclut une pluralité de couches (114), chaque couche (114) présentant la pluralité de cellules (104) ;
dans lequel chaque couche parmi la pluralité de couches présente une géométrie ressemblant à un parallélépipède ressemblant à des tétraèdres et des prismes hexagonaux agencés de telle sorte que chaque face latérale du prisme hexagonal soit partagée avec une face d'un tétraèdre adjacent.
